# EUROPEAN PATENT APPLICATION

(11) **EP 4 598 238 A1**
(43) Date of publication of application: **06.08.2025**
(21) Application number: 23871837.3
(22) Date of filing: 08.09.2023
(51) Int. Cl.: H04W 72/54, H04W 16/14, H04W 28/04, H04W 76/15, H04W 92/18

(54) **TERMINAL DEVICE AND COMMUNICATION METHOD**

(30) Priority: 29.09.2022 JP 2022156104
(71) Applicant: Sharp Kabushiki Kaisha, Sakai City, Osaka 590-8522 (JP)
(72) Inventor: SAKAMOTO Ryunosuke, Sakai City, Osaka 590-8522 (JP); NAKASHIMA Daiichiro, Sakai City, Osaka 590-8522 (JP); LIU Liqing, Sakai City, Osaka 590-8522 (JP); OUCHI Wataru, Sakai City, Osaka 590-8522 (JP); SUZUKI Shoichi, Sakai City, Osaka 590-8522 (JP)
(74) Representative: Müller-Boré & Partner Patentanwälte PartG mbB
(86) International application number: PCT/JP2023/032901
(87) International publication number: WO 2024/070600

(57) **Abstract**

A terminal apparatus including a transmitter configured to perform, for sidelink transmission with HARQ-ACK feedback disabled, channel sensing while maintaining a contention window size last applied, wherein in a case that the number of times that the contention window size is maintained reaches a prescribed number of times, the contention window size is configured to a next larger value.

## Description

### Technical Field

The present invention relates to a terminal apparatus and a communication method.

This application claims priority to JP 2022-156104 filed on September 29, 2022, the contents of which are incorporated herein by reference.

### Background Art

In the 3rd Generation Partnership Project (3GPP), a radio access method and a radio network for cellular mobile communications (hereinafter referred to as "Long Term Evolution (LTE)" or "Evolved Universal Terrestrial Radio Access (EUTRA)") have been studied. In LTE, a base station apparatus is also referred to as an evolved NodeB (eNodeB) and a terminal apparatus is also referred to as a User Equipment (UE). LTE is a cellular communication system in which multiple areas covered by base station apparatuses are arranged in a form of cells. A single base station apparatus may manage multiple serving cells.

In the 3GPP, a next-generation standard (NR: New Radio) has been studied and standardized as a 5G communication system. NR is to satisfy requirements for three scenarios including enhanced Mobile BroadBand (eMBB), massive Machine Type Communication (mMTC), and Ultra Reliable and Low Latency Communication (URLLC) in a single technology framework.

In NR, a sidelink technology is supported in which terminal apparatuses directly communicate with each other without intervention of a base station apparatus. Application of the sidelink technology in an unlicensed spectrum has been studied (Non-Patent Document 1).

### Citation List

### Non Patent Literature

NPL 1: "Title: New WID on NR sidelink evolution", RP-213678, OPPO, LG Electronics. 3GPP TSG RAN Meeting #94e, Dec. 6-17, 2021

### Summary of Invention

### Technical Problem

In an unlicensed band, Listen Before Talk (LBT) based on Clear Channel Assessment (CCA) is used for coexistence with another system. In Japan, Europe, and the like, The LBT function is prescribed as essential in a system operated in a 5-GHz unlicensed band. An aspect of the present invention provides a terminal apparatus capable of realizing fair channel access in an environment in which equipment (terminal apparatuses, base station apparatuses, access points, and the like) of multiple systems may coexist, and a communication method used for the terminal apparatus.

### Solution to Problem

(1) A first aspect of the present invention is a terminal apparatus including a transmitter configured to determine a contention window size, to apply the contention window size to channel sensing, and to perform first sidelink transmission, wherein the transmitter determines the contention window size based on a first number of second sidelink transmissions with HARQ-ACK feedback disabled.
(2) A second aspect of the present invention is a communication method for a terminal apparatus, the communication method including the steps of determining a contention window size, applying the contention window size to channel sensing, and performing first sidelink transmission, wherein the contention window size is determined based on a first number of second sidelink transmissions with HARQ-ACK feedback disabled.

### Advantageous Effects of Invention

According to an aspect of the present invention, terminal apparatuses can communicate with each other with fair channel access realized.

### Brief Description of Drawings

FIG. 1 is a conceptual diagram of a radio communication system according to an aspect of the present embodiment.
FIG. 2 is a schematic diagram illustrating an example of a resource grid in a subframe according to an aspect of the present embodiment.
FIG. 3 is a schematic block diagram illustrating a configuration of a terminal apparatus 1 according to an aspect of the present embodiment.
FIG. 4 is a schematic block diagram illustrating a configuration example of a base station apparatus 3 according to an aspect of the present embodiment.
FIG. 5 is a diagram illustrating an example of interlaced mapping according to an aspect of the present embodiment.
FIG. 6 is a diagram illustrating an example of allocation of PSCCHs monitored in the terminal apparatus 1 according to an aspect of the present embodiment.
FIG. 7 is a diagram illustrating an example of allocation of PSCCHs monitored in the terminal apparatus 1 according to an aspect of the present embodiment.
FIG. 8 is a diagram illustrating an example of sidelink transmission transmitted in the terminal apparatus 1 according to an aspect of the present embodiment.
FIG. 9 is a diagram illustrating an example of sidelink transmission transmitted in the terminal apparatus 1 according to an aspect of the present embodiment.
FIG. 10 is a diagram illustrating an example of a configuration of a contention window size for the terminal apparatus according to an aspect of the present embodiment.

### Description of Embodiments

An embodiment of the present invention will be described below.

"A and/or B" may be a term including "A", "B", or "A and B".

The fact that a parameter or information indicates one or multiple values may mean that the parameter or the information includes at least a parameter or information indicating the one or the multiple values. A higher layer parameter may be a single higher layer parameter. The higher layer parameter may be an Information Element (IE) including multiple parameters.

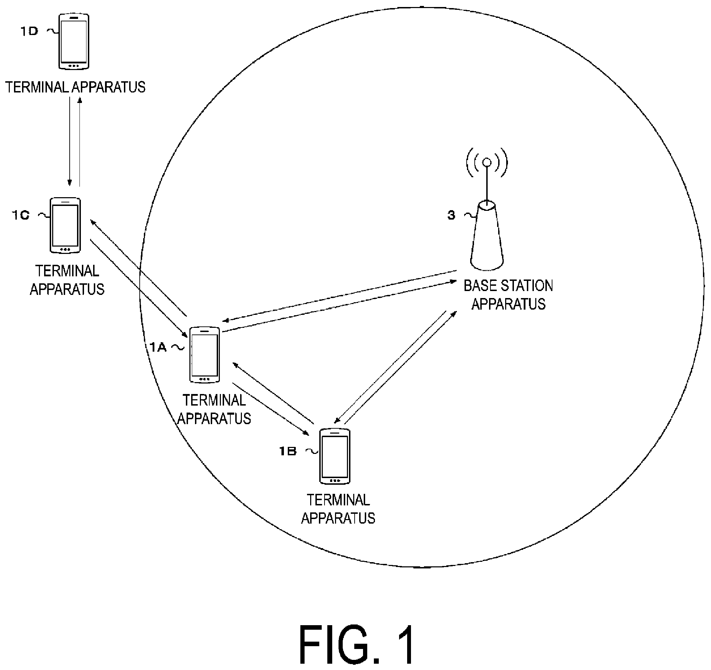

FIG. 1 is a conceptual diagram of a radio communication system according to an aspect of the present embodiment. In FIG. 1, the radio communication system includes terminal apparatuses 1A to 1C and a base station apparatus 3 (gNB). Hereinafter, each of the terminal apparatuses 1A to 1D is also referred to as a terminal apparatus 1 (UE).

The base station apparatus 3 may include one of or both a Master Cell Group (MCG) and a Secondary Cell Group (SCG). The MCG is a group of serving cells at least including a Primary Cell (PCell). The SCG is a group of serving cells including at least a Primary Secondary Cell (PSCell). The PCell is a cell in which an initial connection establishment procedure or a connection re-establishment procedure is performed (has been performed) by the terminal apparatus 1. The PSCell is a serving cell in which a random access procedure is performed by the terminal apparatus 1. The MCG may include one or multiple Secondary Cells (SCells). The SCG may include one or multiple SCells. A serving cell identity is a short identity for identifying the serving cell. The serving cell identity may be provided by a higher layer parameter.

A serving cell group (cell group) is a general term for the MCG, SCG, and PUCCH cell group. The serving cell group may include one or multiple serving cells (or component carriers). One or multiple serving cells (or component carriers) included in the serving cell group may be operated by means of carrier aggregation.

The base station apparatus 3 communicates with the terminal apparatus 1 using different frequency bands (carrier frequencies and frequency spectra). This operation (multi-carrier operation) may also be referred to as carrier aggregation or dual connectivity. Different frequency bands are used for different cells (serving cells). In the base station apparatus 3 and the terminal apparatus 1, one of the multiple cells used in the carrier aggregation may use a downlink frequency band and an uplink frequency band, and another cell may use only the downlink frequency band, or such another cell may also use the downlink frequency band and the uplink frequency band. The terminal apparatus 1 performs initial connection with the base station apparatus 3, and after connection with the base station apparatus 3 is established, connections of multiple cells are added to the terminal apparatus 1. A frequency band used for communication is added to the terminal apparatus 1. A cell (serving cell) used for communication is added to the terminal apparatus 1. Connection with the base station apparatus 3 is added to the terminal apparatus 1.

The terminal apparatus 1A and the terminal apparatus 1B communicate directly with each other by using the sidelink technology. The terminal apparatus 1A and the terminal apparatus 1B are located within the coverage of the base station apparatus 3 (in-coverage). The terminal apparatus 1A and the terminal apparatus 1C communicate directly with each other by using the sidelink technology. The terminal apparatus 1C and the terminal apparatus 1D communicate directly with each other by using the sidelink technology. The terminal apparatus 1C and the terminal apparatus 1D are located outside the coverage of the base station apparatus 3 (out-of-coverage). There are three cases: direct communication between in-coverage terminal apparatuses 1, direct communication between an in-coverage terminal apparatus 1 and an out-of-coverage terminal apparatus 1, and direct communication between out-of-coverage terminal apparatuses 1.

In the radio communication system, the terminal apparatus 1 and the base station apparatus 3 may use one or multiple communication schemes. For example, in a downlink of the radio communication system, Cyclic Prefix-Orthogonal Frequency Division Multiplex (CP-OFDM) may be used. In an uplink of the radio communication system, either CP-OFDM or Discrete Fourier Transform-spread-Orthogonal Frequency Division Multiplex (DFT-s-OFDM) may be used. Here, DFT-s-OFDM is a communication scheme in which Transform precoding is applied to CP-OFDM before signal generation. Here, Transform precoding is also referred to as DFT precoding.

CP-OFDM may be used for the sidelink between the terminal apparatus 1 and the terminal apparatus 1. DFT-s-OFDM may be used for the sidelink between the terminal apparatus 1 and the terminal apparatus 1.

As illustrated in FIG. 1, the base station apparatus 3 may include one transmission and/or reception apparatus (or transmission point, transmission apparatus, reception point, reception apparatus, transmission and/or reception point). On the other hand, in some cases, the base station apparatus 3 may include multiple transmission and/or reception apparatuses. In a case that the base station apparatus 3 includes multiple transmission and/or reception apparatuses, the multiple transmission and/or reception apparatuses may be arranged at geographically different positions.

The SubCarrier Spacing (SCS) Δf for a certain subcarrier spacing configuration µ may be Δf = 2^{µ} × 15 kHz. For example, the subcarrier spacing configuration µ may indicate one of 0, 1, 2, 3, or 4.

The time unit T_{c} = 1 / (Δfₘₐₓ × N_{f}) may be used to represent the length of the time domain. Here Δfₘₐₓ may be 480 kHz. N_{f} may be 4096. A constant κ may be κ = Δfₘₐₓ × N_{f} / (Δf_{ref}N_{f, ref}) = 64. Δf_{ref} may be 15 kHz. N_{f, ref} is 2048.

Transmission of a signal in the downlink/uplink may be organized into a radio frame (system frame, frame) having the length Tf. Here, Tf may be (Δfₘₐₓ × Nf / 100) × Ts = 10 ms.

Transmission of a signal in the sidelink may be organized into a radio frame (system frame, frame) having the length Tf. Here, Tf may be (Δfmax × Nf / 100) × Ts = 10 ms.

The radio frame may include 10 subframes. Here, the length Tsf of the subframe may be (ΔfmaxNf / 1000) × Ts = 1 ms. The number of OFDM symbols per subframe may be Nsubframe, µsymb = Nslotsymb × Nsubframe, µslot.

An OFDM symbol is used as a time domain unit of the communication scheme used in the radio communication system. For example, the OFDM symbol may be used as a time domain unit of CP-OFDM. The OFDM symbol may be used as a time domain unit of DFT-s-OFDM.

The slot may include multiple OFDM symbols. For example, Nslotsymb continuous OFDM symbols may constitute one slot. For example, in normal CP configuration, Nslotsymb may be 14. In extended CP configuration, Nslotsymb may be 12.

The slots may be indexed in the time domain. For example, slot indices nµs may be given in ascending order in the subframe with integer values within a range of 0 to Nsubframe, µslot - 1. Slot indices nµs, f may be given in ascending order in the radio frame with integer values within a range of 0 to Nframe, µslot - 1.

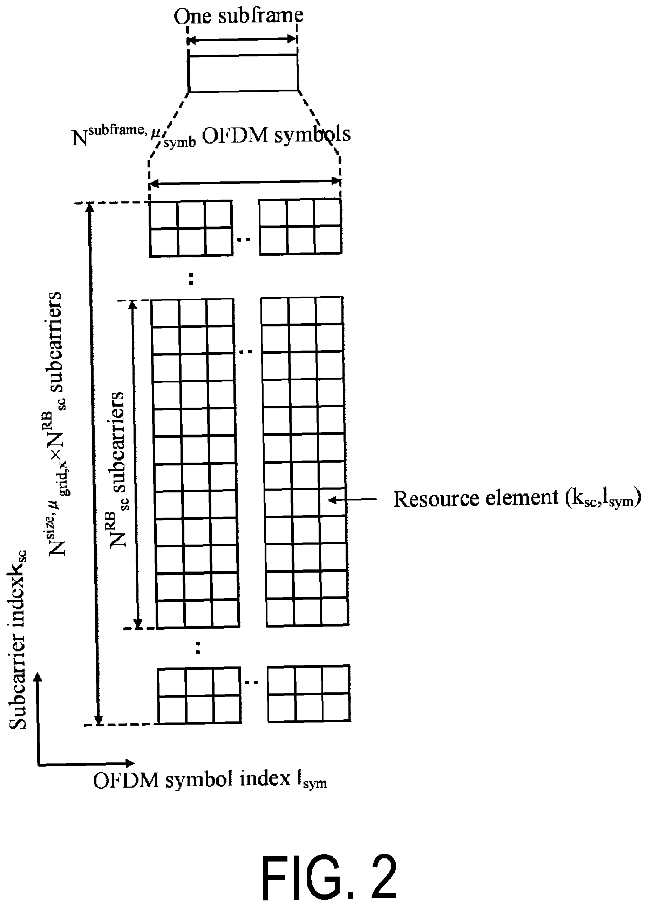

FIG. 2 is a diagram illustrating a configuration example of the resource grid according to an aspect of the present embodiment. In the resource grid of FIG. 2, the horizontal axis corresponds to an OFDM symbol index lsym, and the vertical axis corresponds to a subcarrier index ksc. The resource grid in FIG. 2 includes Nsize, µgrid, x × NRBsc subcarriers, and Nsubframe, µsymb OFDM symbols. Here, Nsize, µgrid, x denotes the bandwidth of the SCS-specific carrier. The unit of the value of Nsize, µgrid, x is a resource block.

In the resource grid, a resource identified by the subcarrier index ksc and the OFDM symbol index lsym is also referred to as a Resource Element (RE).

The Resource Block (RB) includes NRBsc continuous subcarriers. The resource block is a general term for a common resource block, a Physical Resource Block (PRB), and a Virtual Resource Block (VRB). For example, NRBsc may be 12.

A BandWidth Part (BWP) may be configured as a subset of the resource grid. The BWP configured for the downlink is also referred to as a downlink BWP. The BWP configured for the uplink is also referred to as an uplink BWP.

The BWP configured for the sidelink is also referred to as a sidelink BWP.

Carrier aggregation may mean that communication is performed by using multiple serving cells being aggregated. Carrier aggregation may mean that communication is performed by using multiple component carriers being aggregated. Carrier aggregation may mean that communication is performed by using multiple downlink component carriers being aggregated. Carrier aggregation may mean that communication is performed by using multiple uplink component carriers being aggregated.

In the following, a configuration example of the terminal apparatus 1 according to an aspect of the present embodiment will be described.

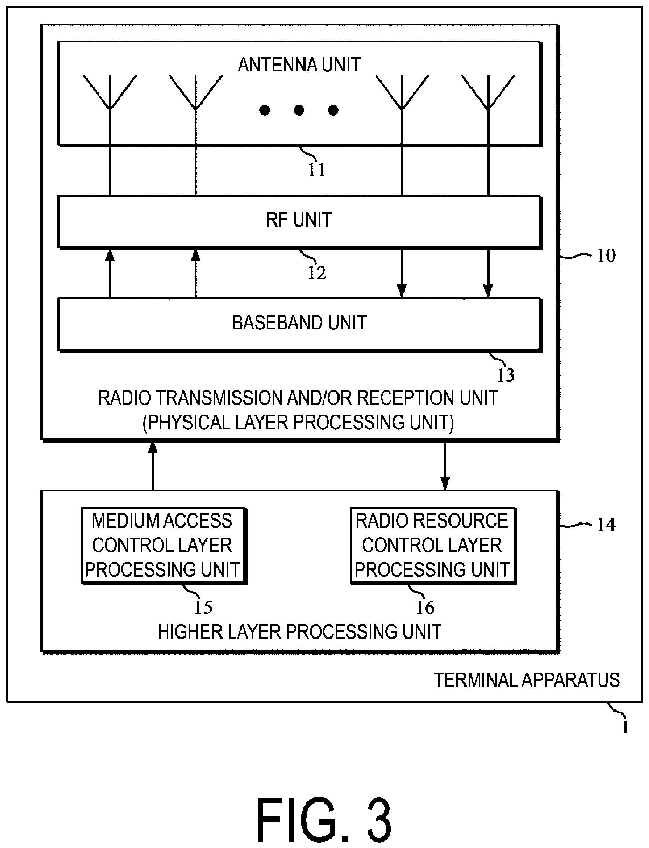

FIG. 3 is a schematic block diagram illustrating a configuration example of the terminal apparatus 1 according to an aspect of the present embodiment. As illustrated in the figure, the terminal apparatus 1 includes a radio transmission and/or reception unit 10 and a higher layer processing unit 14. The radio transmission and/or reception unit 10 at least includes a part or all of an antenna unit 11, a Radio Frequency (RF) unit 12, and a baseband unit 13. The higher layer processing unit 14 at least includes a part or all of a medium access control layer processing unit 15 and a radio resource control layer processing unit 16. The radio transmission and/or reception unit 10 is also referred to as a transmitter, a receiver, or a physical layer processing unit.

The radio transmission and/or reception unit 10 performs processing of the physical layer.

For example, the radio transmission and/or reception unit 10 may generate a baseband signal of an uplink physical channel. Here, the transport block delivered by the higher layer on the UL-SCH may be mapped to the uplink physical channel. For example, the radio transmission and/or reception unit 10 may generate a baseband signal of an uplink physical signal.

For example, the radio transmission and/or reception unit 10 may attempt to detect information conveyed on a downlink physical channel. Here, a transport block included in the information carried by the downlink physical channel may be delivered to the higher layer on the DL-SCH. For example, the radio transmission and/or reception unit 10 may attempt to detect information conveyed on an uplink physical signal.

For example, the radio transmission and/or reception unit 10 may generate a baseband signal of a sidelink physical channel. For example, the radio transmission and/or reception unit 10 may generate a baseband signal of a sidelink physical signal. For example, the radio transmission and/or reception unit 10 may attempt to detect information conveyed on the sidelink physical channel. For example, the radio transmission and/or reception unit 10 may attempt to detect information conveyed on the sidelink physical signal.

Moreover, a receiver of the terminal apparatus 1 receives a PDCCH. A reception processing unit of the terminal apparatus 1 performs processing of receiving the PDCCH in the downlink frequency band (cell, component carrier, carrier). The reception processing unit of the terminal apparatus 1 performs processing such as demodulation and decoding on the PDCCH. The reception processing unit of the terminal apparatus 1 performs processing of receiving the PDCCH and performs processing of detecting downlink control information.

The receiver of the terminal apparatus 1 receives the PDSCH. The reception processing unit of the terminal apparatus 1 performs processing of receiving the PDSCH in the downlink frequency band (cell, component carrier, carrier). The reception processing unit of the terminal apparatus 1 performs processing such as demodulation and decoding on the PDSCH.

The receiver of the terminal apparatus 1 receives the PSCCH. The reception processing unit of the terminal apparatus 1 performs processing such as demodulation and decoding on the PSCCH. The reception processing unit of the terminal apparatus 1 performs processing of receiving the PSCCH and performs processing of detecting sidelink control information. The receiver of the terminal apparatus 1 determines frequency resources (an interlace and a resource block described below) constituting the PSCCH. The receiver of the terminal apparatus 1 determines the OFDM symbol in which the PSCCH may be allocated. The receiver of the terminal apparatus 1 blind-decodes the PSCCH. The receiver of the terminal apparatus 1 blind-decodes the PSCCH in one slot within one resource pool. The receiver of the terminal apparatus 1 may blind-decode the PSCCH in two or more slots within one resource pool. The receiver of the terminal apparatus 1 may blind-decode two or more PSCCHs in one slot within one resource pool. The terminal apparatus 1 receives the PSSCH. The reception processing unit of the terminal apparatus 1 performs processing such as demodulation and decoding on the PSSCH. The receiver of the terminal apparatus 1 receives a PSFCH. The reception processing unit of the terminal apparatus 1 receives the HARQ-ACK through the PSFCH.

The transmitter (also referred to as a transmission processing unit) of the terminal apparatus 1 transmits the HARQ-ACK. The transmission processing unit of the terminal apparatus 1 transmits the HARQ-ACK for the PDSCH. The transmission processing unit of the terminal apparatus 1 transmits the HARQ-ACK in the uplink frequency band (cell, component carrier, carrier).

The transmission processing unit of the terminal apparatus 1 transmits the HARQ-ACK for the PSSCH. The transmission processing unit of the terminal apparatus 1 transmits the HARQ-ACK in the sidelink frequency band. The transmission processing unit of the terminal apparatus 1 transmits the HARQ-ACK through the PSFCH. The terminal apparatus 1 may transmit the HARQ-ACK through the PSSCH. The transmission processing unit of the terminal apparatus 1 need not transmit the HARQ-ACK for the PSSCH.

The transmitter of the terminal apparatus 1 transmits the PSCCH. The transmission processing unit of the terminal apparatus 1 performs processing such as encoding and modulation on the PSCCH. The transmission processing unit of the terminal apparatus 1 performs processing of transmitting the sidelink control information using the PSCCH. The transmitter of the terminal apparatus 1 determines frequency resources (an interlace and a resource block described below) constituting the PSCCH. The transmitter of the terminal apparatus 1 determines the OFDM symbol in which the PSCCH may be allocated. The transmitter of the terminal apparatus 1 transmits the PSSCH. The transmission processing unit of the terminal apparatus 1 performs processing such as encoding and modulation on the PSSCH.

The higher layer processing unit 14 outputs uplink data (transport block) generated by a user operation or the like to the radio transmission and/or reception unit 10. The higher layer processing unit 14 performs processing of an MAC layer, a Packet Data Convergence Protocol (PDCP) layer, a Radio Link Control (RLC) layer, and an RRC layer.

The higher layer processing unit 14 outputs sidelink data (a transport block) to the radio transmission and/or reception unit 10.

The medium access control layer processing unit (MAC layer processing unit) 15 included in the higher layer processing unit 14 performs processing of the MAC layer.

The radio resource control layer processing unit 16 included in the higher layer processing unit 14 performs processing of the RRC layer. The radio resource control layer processing unit 16 manages various pieces of configuration information/parameters (RRC parameters) of the terminal apparatus. The radio resource control layer processing unit 16 sets various pieces of configuration information/parameters (RRC parameters), based on a higher layer signaling received from the base station apparatus 3. Specifically, the radio resource control layer processing unit 16 sets various pieces of configuration information/parameters (RRC parameters), based on information indicating the various pieces of configuration information/parameters (RRC parameters) received from the base station apparatus 3. Note that the configuration information may include information related to the processing or configurations of the physical channel, the physical signal (that is, the physical layer), the MAC layer, the PDCP layer, the RLC layer, and the RRC layer. The parameters may be higher layer parameters.

For example, the radio resource control layer processing unit 16 may acquire the RRC parameter included in the RRC message on a certain logical channel and set the acquired RRC parameter in a storage area of the terminal apparatus 1. The RRC parameter set in the storage area of the terminal apparatus 1 may be provided to a lower layer.

The radio resource control layer processing unit 16 sets an RRC resource set based on RRC signaling received from the base station apparatus 3. The radio resource control layer processing unit 16 configures a search space in the control resource set. The radio resource control layer processing unit 16 configures PDCCH candidates to be monitored in the control resource set. The radio resource control layer processing unit 16 configures the number of PDCCH candidates to be monitored in the control resource set. The radio resource control processing unit 16 configures an Aggregation level of the PDCCH candidates to be monitored in the control resource set.

The radio resource control layer processing unit 16 configures a DCI format to be monitored in the control resource set. The radio resource control layer processing unit 16 may configure a DCI format to be monitored in the search space. The radio resource control layer processing unit 16 configures the DCI format to be monitored in the control resource set based on the RRC signaling indicated from the base station apparatus 3. The radio resource control layer processing unit 16 may configure the DCI format monitored in the search space based on the RRC signaling indicated from the base station apparatus 3. The radio resource control layer processing unit 16 configures one or more DCI formats to be monitored in the reception processing unit.

The radio resource control layer processing unit 16 performs configuration related to multiple search spaces. The configurations for the multiple search spaces are each indexed.

The radio resource control layer processing unit 16 performs configuration related to CSI feedback (transmission of channel state information) based on the RRC signaling received from the base station apparatus 3. The radio resource control layer processing unit 16 configures transmission periodicity of the CSI feedback, a transmission start timing (offset) of the CSI feedback, an information type of the CSI feedback, and the like. The radio resource control layer processing unit 16 performs configuration related to multiple pieces of CSI feedback. The configurations for multiple pieces of CSI feedback are each indexed.

The radio resource control layer processing unit 16 performs configuration related to SPS based on the RRC signaling received from the base station apparatus 3. The radio resource control layer processing unit 16 configures the periodicity of the SPS resource (PDSCH resource), the start timing (offset) of the SPS resource (PDSCH resource), the number of HARQ processes configured for the SPS, the offset used for deriving a HARQ process ID used for the SPS, the value of an RNTI for the SPS scheduling, and the like. The radio resource control layer processing unit 16 performs configuration related to multiple SPSs. The configurations for the multiple SPSs are each indexed.

The radio resource control layer processing unit 16 performs configuration of carrier aggregation based on the RRC signaling received from the base station apparatus 3. The radio resource control layer processing unit 16 configures a serving cell (a secondary cell or a primary secondary cell) as a configuration of carrier aggregation. The serving cell may include a downlink component carrier. The serving cell may include a downlink component carrier and an uplink component carrier. The radio resource control layer processing unit 16 controls the radio transmission and/or reception unit 10 to perform reception processing on the downlink component carrier configured in the carrier aggregation configuration. The radio resource control layer processing unit 16 controls the radio transmission and/or reception unit 10 to perform transmission processing on the uplink component carrier configured in the carrier aggregation configuration.

The radio resource control layer processing unit 16 performs configuration related to the sidelink based on the RRC signaling received from the base station apparatus 3. The radio resource control layer processing unit 16 configures a parameter related to the sidelink provided from the base station apparatus 3. Parameters related to the sidelink will be described below. For example, the radio resource control layer processing unit 16 configures an OFDM symbol in which the PSCCH may be allocated. For example, the radio resource control layer processing unit 16 configures a band in which the PSCCH is allocated. For example, the radio resource control layer processing unit 16 configures the number of resource blocks or interlaces constituting one PSCCH. The radio resource control layer processing unit 16 performs configuration related to transmission and reception of the PSCCH with respect to the radio transmission and/or reception unit 10.

The medium access control layer processing unit (MAC layer processing unit) 15 performs activation/deactivation of the secondary cell based on a MAC control element (MAC CE) received from the base station apparatus 3. The medium access control layer processing unit (MAC layer processing unit) 15 outputs information indicating activation/deactivation for the multiple serving cells configured by the radio resource control layer processing unit 16, to the radio transmission and/or reception unit 10 based on the MAC CE (SCell Activation/Deactivation MAC CEs) including the information of activation/deactivation of the secondary cell. The medium access control layer processing unit (MAC layer processing unit) 15 performs deactivation of the secondary cell based on a timer. The medium access control layer processing unit (MAC layer processing unit) 15 determines, based on measurement using the timer, that the base station apparatus 3 has not scheduled the serving cell for a certain period, deactivates the serving cell, and controls the radio transmission and/or reception unit 10.

The medium access control layer processing unit (MAC layer processing unit) 15 performs processing of a sidelink HARQ operation, a sidelink scheduling request, a sidelink buffer status report, and a CSI report.

The radio resource control layer processing unit 16 may include, in the RRC message, function information generated based on the function included in the terminal apparatus 1 and transmit the RRC message to the base station apparatus 3.

The radio transmission and/or reception unit 10 performs modulation processing, encoding processing, and transmission processing. The radio transmission and/or reception unit 10 generates a physical signal by performing, on data (transport block), encoding processing, modulation processing, and baseband signal generation processing (conversion into a time-continuous signal), and transmits the physical signal to the base station apparatus 3.

The radio transmission and/or reception unit 10 performs demodulation processing, decoding processing, and reception processing. The radio transmission and/or reception unit 10 may output, to the higher layer processing unit 14 on the DL-SCH, a transport block included in the information detected based on the demodulation processing and the decoding processing on the received physical signal.

The radio transmission and/or reception unit 10 stops various reception processing operations and various transmission processing operations in the deactivated serving cell. For example, the radio transmission and/or reception unit 10 stops monitoring the PDCCH in the deactivated serving cell. For example, the radio transmission and/or reception unit 10 stops reception of the PDSCH in the deactivated serving cell. For example, the radio transmission and/or reception unit 10 stops the transmission of the SRS in the deactivated serving cell. For example, the radio transmission and/or reception unit 10 stops transmission of the PUSCH in the deactivated serving cell.

The RF unit 12 converts (downconverts) a signal received via the antenna unit 11 into a baseband signal and removes unnecessary frequency components. The RF unit 12 outputs the baseband signal to the baseband unit 13.

The baseband unit 13 converts the analog signal input from the RF unit 12 into a digital signal. The baseband unit 13 removes a portion corresponding to a Cyclic Prefix (CP) from the digital signal resulting from the conversion. The baseband unit 13 performs Fast Fourier Transform (FFT) on the baseband signal from which the CP has been removed to extract a signal in the frequency domain.

The baseband unit 13 may generate an OFDM symbol by performing Inverse Fast Fourier Transform (IFFT) on the physical signal. The baseband unit 13 adds CPs to the OFDM symbols to generate a baseband digital signal. The baseband unit 13 converts the baseband digital signal to an analog signal. The baseband unit 13 outputs, to the RF unit 12, the analog signal resulting from the conversion.

The RF unit 12 removes unnecessary frequency components from the analog signal received from the baseband unit 13 through a low-pass filter, and upconverts the analog signal into a signal having a carrier frequency to generate an RF signal. The RF unit 12 transmits an RF signal via the antenna unit 11. The RF unit 12 amplifies power. The RF unit 12 may have a function of controlling transmission power. The RF unit 12 is also referred to as a transmit power control unit.

The radio transmission and/or reception unit 10 performs carrier sense (LBT) before transmission of a signal in order to avoid collision of the signal with another equipment (apparatus). For the type of LBT, the following types are used.
- Type 1: LBT for performing a random backoff process using a contention window having a variable size
- Type 2A: LBT in which there is no random backoff process and carrier sensing of 25us is performed before signal transmission
- Type 2B: LBT in which there is no random backoff process and carrier sensing of 16us is performed before signal transmission
- Type 2C: LBT is not performed

The radio transmission and/or reception unit 10 transmits a signal after detection of no transmission from another equipment in the listening (idle state), and does not perform signal transmission in a case that transmission from another equipment is detected in the listening (busy state). In a case that an LBT result is idle, the radio transmission and/or reception unit 10 acquires a transmission opportunity and performs transmission. In a case that the LBT result is busy, the radio transmission and/or reception unit 10 performs no transmission. The time of the transmission opportunity is referred to as Channel Occupancy Time (COT). In the LBT, the terminal apparatus 1 monitors a channel before transmitting data, evaluates an idle channel, and transmits data in a case that the channel is confirmed to be in an idle state.

In a case of performing a random backoff process, the radio transmission and/or reception unit 10 randomly generates a backoff counter value within the range of a contention window size after the last transmission. In the random backoff, the terminal apparatus 1 evaluates whether the channel is in the idle state by detecting the channel energy at each time interval using a random backoff counter. The radio transmission and/or reception unit 10 stands by until the channel is confirmed idle for a certain period of time, and performs carrier sense (sensing) for each sensing slot time. In a case that the channel is idle as a result of the carrier sense, the radio transmission and/or reception unit 10 decreases the backoff counter value. In a case that the channel is busy as a result of the carrier sense, the radio transmission and/or reception unit 10 maintains the backoff counter value and performs the carrier sense after waiting until the channel is confirmed idle for a certain period of time. As a result of repeating the above operation, after the backoff counter value becomes 0, the radio transmission and/or reception unit 10 obtains the access right to the channel and can start signal transmission on the channel.

In a case that the HARQ-ACK feedback is applied to the sidelink, the radio transmission and/or reception unit 10 updates the contention window size based on the status of the HARQ-ACK. In a case that the status of the HARQ-ACK is ACK, the radio transmission and/or reception unit 10 configures the contention window size with the minimum value. In a case that the status of the HARQ-ACK is NACK, the radio transmission and/or reception unit 10 configures a next larger value for the contention window size. In a case that the contention window size reaches the maximum configurable value, the radio transmission and/or reception unit 10 continues to use the maximum value even in a case that the status of the HARQ-ACK is NACK.

The initial value of the random backoff counter may be an integer between 0 and the contention window size. By adjusting the contention window size before the random backoff counter is initialized, the average time required for the terminal apparatus 1 to access the channel is controlled.

The terminal apparatus 1 performs listen-before-talk (LBT) on the channel before transmission on the channel. The terminal apparatus 1 may adjust the amount of time during which the LBT is performed. The terminal apparatus 1 can select a random number between 0 and the contention window size. In a case that the channel is free for at least the amount of time associated with the random number, the terminal apparatus 1 can obtain a transmission opportunity and perform transmission.

In the following, a configuration example of the base station apparatus 3 according to an aspect of the present embodiment will be described.

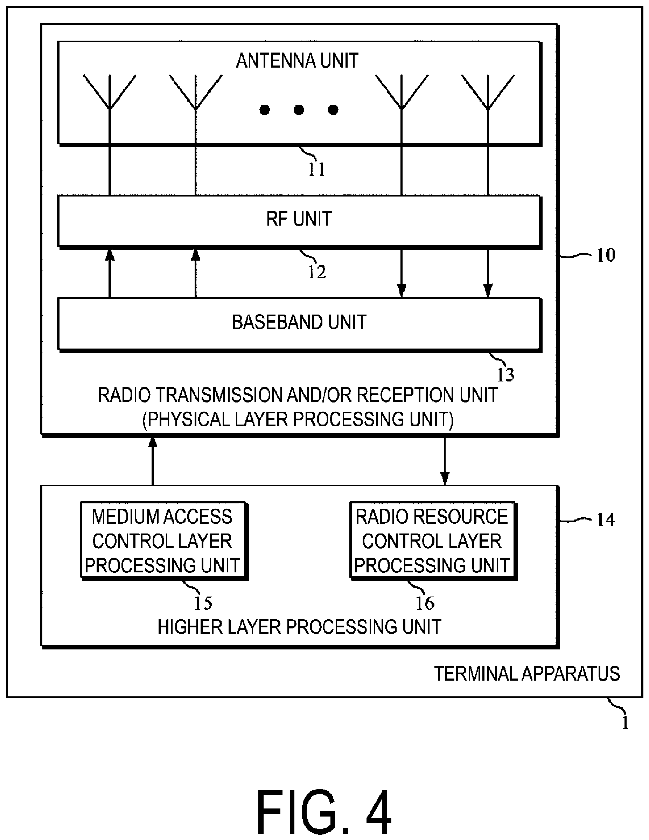

FIG. 4 is a schematic block diagram illustrating a configuration example of the base station apparatus 3 according to an aspect of the present embodiment. As illustrated in the figure, the base station apparatus 3 includes a radio transmission and/or reception unit 30 and a Higher layer processing unit 34. The radio transmission and/or reception unit 30 includes an antenna unit 31, a Radio Frequency (RF) unit 32, and a baseband unit 33. The higher layer processing unit 34 includes a medium access control layer processing unit 35 and a radio resource control layer processing unit 36. The radio transmission and/or reception unit 30 is also referred to as a transmitter, a receiver, or a physical layer processing unit.

The higher layer processing unit 34 performs processing of the Medium Access Control (MAC) layer, the Packet Data Convergence Protocol (PDCP) layer, the Radio Link Control (RLC) layer, and the Radio Resource Control (RRC) layer. Here, the MAC layer is also referred to as a MAC sublayer. The PDCP layer is also referred to as a PDCP sublayer. The RLC layer is also referred to as an RLC sublayer. The RRC layer is also referred to as an RRC sublayer.

The medium access control layer processing unit 35 included in the higher layer processing unit 34 performs processing of the MAC layer. Here, the processing of the MAC layer may include a part or all of mapping between a logical channel and a transport channel, multiplexing one or multiple MAC Service Data Units (SDUs) on a transport block, decomposing a transport block delivered from the physical layer on the UL-SCH into one or multiple MAC SDUs, applying a Hybrid Automatic Repeat reQuest (HARQ) to the transport block, and processing a scheduling request.

The radio resource control layer processing unit 36 included in the higher layer processing unit 34 performs processing of the RRC layer. The processing of the RRC layer may include a part or all of management of a broadcast signal, management of an RRC connected/RRC idle state, and RRC reconfiguration. The radio resource control layer processing unit 36 generates, or acquires from a higher node, downlink data (transport block) mapped to a PDSCH, system information, an RRC message, an MAC CE, and the like, and outputs the data to the radio transmission and/or reception unit 30.

The radio resource control layer processing unit 36 manages various pieces of configuration information/parameters (RRC parameters) of each terminal apparatus 1. The radio resource control layer processing unit 36 may set various pieces of configuration information/parameters for each of the terminal apparatuses 1 through a higher layer signaling. Specifically, the radio resource control layer processing unit 36 transmits or broadcasts information indicating the various pieces of configuration information/parameters. Note that the configuration information may include information related to the processing or configurations of the physical channel, the physical signal (that is, the physical layer), the MAC layer, the PDCP layer, the RLC layer, and the RRC layer. The parameters may be higher layer parameters. For example, the radio resource control layer processing unit 36 may include the RRC parameter in an RRC message on a certain logical channel and transmit the RRC message to the terminal apparatus 1. Here, the RRC message may be mapped to any of a Broadcast Control CHannel (BCCH), a Common Control CHannel (CommonControl CHannel, CCCH), and a Dedicated Control CHannel (DCCH).

The radio resource control layer processing unit 36 may determine the RRC parameter to be transmitted to the terminal apparatus 1, based on the RRC parameter included in the RRC message transmitted from the terminal apparatus 1. Here, the RRC message transmitted from the terminal apparatus 1 may be related to a function information report of the terminal apparatus 1.

The radio resource control layer processing unit 36 configures a control resource set for the terminal apparatus 1. Multiple PDCCH candidates are configured within the configured control resource set. The radio resource control layer processing unit 36 configures a search space for the terminal apparatus 1. The radio resource control layer processing unit 36 configures the DCI format monitored in the search space for the terminal apparatus 1.

The radio resource control layer processing unit 36 configures the DCI format applied to the terminal apparatus 1 in the control resource set. The radio resource control layer processing unit 36 generates the RRC signaling indicating the DCI format applied to the terminal apparatus 1. The radio resource control layer processing unit 36 configures one or more DCI formats applied in the transmission processing unit.

The radio resource control layer processing unit 36 performs configuration related to multiple search spaces. The configurations for the multiple search spaces are each indexed.

The radio resource control layer processing unit 36 configures the terminal apparatus 1 with a resource for transmission of the HARQ-ACK. The radio resource control layer processing unit 36 configures a resource for transmission of the HARQ-ACK for the PDSCH in the downlink frequency band (cell, component carrier, carrier). The radio resource control layer processing unit 36 sets a resource for transmission of the HARQ-ACK for the PDSCH in the uplink frequency band (cell, component carrier, carrier).

The radio resource control layer processing unit 36 configures CSI feedback (transmission of channel state information) for the terminal apparatus 1. The radio resource control layer processing unit 36 configures transmission periodicity of the CSI feedback, a transmission start timing (offset) of the CSI feedback, an information type of the CSI feedback, and the like. The radio resource control layer processing unit 36 performs configuration related to multiple pieces of CSI feedback. The configurations for multiple pieces of CSI feedback are each indexed.

The radio resource control layer processing unit 36 performs configures the terminal apparatus 1 with the SPS. The radio resource control layer processing unit 36 configures the periodicity of the SPS resource (PDSCH resource), the start timing (offset) of the SPS resource (PDSCH resource), the number of HARQ processes configured for the SPS, the offset used for deriving the HARQ process ID used for the SPS, the value of the RNTI for the SPS scheduling, and the like. The radio resource control layer processing unit 36 performs configuration related to multiple SPSs. The configurations for the multiple SPSs are each indexed.

The radio resource control layer processing unit 36 configures carrier aggregation for the terminal apparatus 1. The radio resource control layer processing unit 36 configures a serving cell (a secondary cell or a primary secondary cell) as a configuration of the carrier aggregation. The serving cell may include a downlink component carrier. The serving cell may include a downlink component carrier and an uplink component carrier. The radio resource control layer processing unit 36 controls the radio transmission and/or reception unit 30 to perform transmission processing using the downlink component carrier configured in the carrier aggregation configuration for the terminal apparatus 1. The radio resource control layer processing unit 36 controls the radio transmission and/or reception unit 30 to perform reception processing using the uplink component carrier configured in the carrier aggregation configuration for the terminal apparatus 1.

The radio resource control layer processing unit 36 configures the sidelink for the terminal apparatus 1. The radio resource control layer processing unit 36 configures the terminal apparatus 1 with a parameter related to the sidelink and notifies the terminal apparatus 1 of the parameter via the radio transmission and/or reception unit 30. For the parameters related to the sidelink, for example, the following information is used.
- Configuration of a sidelink BWP
- Configuration of a sidelink radio bearer
- Configuration of sidelink measurement

The information indicating the configuration of the sidelink BWP includes information indicating a start position of a symbol in a slot used for the sidelink, the length of the symbol, a configuration of the PSBCH, a configuration of a sidelink resource pool, and the like. The information indicating the configuration of the PSBCH includes information indicating a parameter used for transmission power control of the PSBCH. The information indicating the configuration of the sidelink resource pool includes information indicating the configuration of a reception resource pool for the sidelink, the configuration of a transmission resource pool for the sidelink, and the like. The configuration of the transmission resource pool for the sidelink includes the configuration of the transmission resource pool for a method (mode 1) in which the base station apparatus 3 indicates scheduling information to the terminal apparatus 1, and the configuration of the transmission resource pool for a method (mode 2) in which the terminal apparatus 1 autonomously performs resource selection.

The sidelink resource pool configuration information includes information indicating the PSCCH configuration, information indicating the PSSCH configuration, information indicating the PSFCH configuration, information indicating the sidelink subchannel size, information indicating the sidelink subchannel start position, information indicating an MCS table used for the sidelink, information indicating a sidelink PTRS configuration, information indicating a TDD UL-DL configuration, information indicating the number of PRBs in the sidelink resource pool, information indicating the time resource in the sidelink resource pool, information indicating a sidelink transmission power control parameter, information indicating the maximum number of reserved PSCCH/PSSCH resources that may be indicated by one SCI, information indicating a set of reservable resource durations, information indicating whether a PSCCH or PSSCH DM RS is used for L1 RSRP measurement in sensing operation, information indicating a start position of a sensing window, information indicating an end position of the sensing window, information indicating a sidelink synchronization configuration, and the like.

The information indicating the sidelink resource pool configuration may include information indicating a slot configuration. The information indicating the sidelink resource pool configuration may also include information indicating which of slot configurations is applied: a slot configuration in which the PSCCH may be allocated only in the first half of a slot (the second OFDM symbol or the second and third OFDM symbols), and a slot configuration in which the PSCCH may be allocated in the first half of a slot (the second OFDM symbol or the second and third OFDM symbols), or in the second half of the slot (the ninth OFDM symbol or the ninth and tenth OFDM symbols).

The PSSCH is allocated in any OFDM symbol subsequent to the OFDM symbol in which the PSCCH is allocated. For example, the PSSCH is allocated in any of the second and subsequent OFDM symbols in the slot. For example, in a case that the PSCCH is allocated in the first half of the slot, the PSSCH is allocated in any of the second and subsequent OFDM symbols in the slot, and in a case that the PSCCH is allocated in the second half of the slot, the PSSCH is allocated in any of the ninth and subsequent OFDM symbols in the slot.

The information indicating the PSCCH configuration includes information indicating the number of PSCCH symbols, information indicating the number of RBs constituting the PSCCH, information indicating an initial value (ID) of scrambling of the PSCCH DM RS, and information indicating the number of bits reserved in the first stage SCI.

The information indicating the PSSCH configuration includes information indicating a candidate of a β offset used to determine the number of encoded modulation symbols of the 2nd stage SCI, information indicating a time domain pattern for the PSSCH DM RS, and information indicating a scaling factor for limiting the number of resource elements allocated to the PSSCH 2nd stage SCI.

The information indicating the PSFCH configuration includes information indicating a set of PRBs used for transmission and/or reception of the PSFCH, information indicating the number of cyclic shift pairs used for PSFCH transmission that may be multiplexed in one PRB, information indicating the number of PSFCH resources available for multiplexing of HARQ-ACK information, information indicating a scrambling ID for PSFCH sequence hopping, information indicating a duration of PSFCH resources, and information indicating a minimum time gap between the PSSCH and the PSFCH.

The information indicating the sidelink transmission power control parameter includes information indicating a parameter used for transmission power control based on a sidelink path loss and information indicating a parameter used for transmission power control based on a downlink path loss.

The information indicating the sidelink synchronization configuration includes information indicating whether the sidelink synchronization configuration is used for transmission and/or reception of a sidelink synchronization signal in a case that the terminal apparatus 1 is synchronized with a GNSS or the sidelink synchronization configuration is used for transmission and/or reception of the sidelink synchronization signal in a case that the terminal apparatus 1 is synchronized with the base station apparatus 3, information indicating the type of hysteresis in a case that the synchronization reference terminal apparatus 1 is evaluated, information indicating the number of sidelink SSB transmissions in one sidelink SSB duration, information indicating the duration of sidelink SSBs and the start position of the duration, information indicating the ID of the sidelink synchronization signal, information indicating a threshold used for determination of transmission of the sidelink synchronization signal, and the like.

The information indicating the sidelink radio bearer configuration includes information indicating whether the terminal apparatus 1 acts as a synchronization source, information indicating a parameter used for detecting a sidelink radio link failure, information indicating the frequency at which the sidelink is used, information indicating a configuration for the method (mode 1) in which the base station apparatus 3 indicates scheduling information to the terminal apparatus 1, information indicating a configuration for the method (mode 2) in which the terminal apparatus 1 autonomously performs resource selection, information indicating whether CSI reporting is used, information indicating a sidelink scheduling request configuration, information indicating the priority of sidelink SSB transmission and/or reception, information indicating an RLC mode, information indicating a sidelink logical channel configuration, information indicating a sidelink RLC configuration, and the like.

The information indicating the frequency at which the sidelink is used further includes information indicating subcarrier spacing, information indicating the frequency position of the sidelink SSB, information indicating synchronization priority, and the like.

The information indicating the configuration for the method (mode 1) in which the base station apparatus 3 indicates the scheduling information to the terminal apparatus 1 includes information indicating, to the terminal apparatus 1, the RNTI used by the base station apparatus 3 to scramble a CRC of the DCI format (for example, DCI format 3_0) including the scheduling information, information indicating a sidelink MAC configuration, and information indicating a sidelink Configured Grant configuration. The information indicating the sidelink MAC configuration includes information indicating a sidelink BSR configuration and information indicating a threshold used for determining priorities of sidelink transmission and uplink transmission. The information indicating the sidelink Configured Grant configuration includes information indicating an ID for identifying the sidelink Configured Grant, information indicating a frequency resource for the sidelink Configured Grant, information indicating a time resource for the sidelink Configured Grant, information indicating a HARQ process ID of the sidelink Configured Grant, information indicating a resource used for sidelink HARQ-ACK transmission, information indicating a duration of the sidelink Configured Grant, information indicating a resource pool to which the sidelink Configured Grant is applied, information indicating a starting subchannel of the sidelink Configured Grant, and the like.

The information indicating the configuration for the method (mode 2) in which the terminal apparatus 1 autonomously performs the resource selection includes information indicating PSSCH transmission parameters such as the MCS, a subchannel number, the number of retransmissions, and the transmission power parameter, information indicating the probability of use for resource selection, information indicating a threshold for RSRP used for the resource selection, and the like.

The information indicating the sidelink logical channel configuration includes information indicating a sidelink logical channel priority, information indicating a scheduling request configuration applicable to the sidelink logical channel, information indicating a bit rate, information indicating a sidelink bucket size duration, information indicating whether HARQ feedback is applied to the sidelink logical channel, information indicating a subcarrier spacing applied to a resource to which the sidelink logical channel is mapped, information indicating a maximum physical channel duration of the resource to which the sidelink logical channel is mapped, information indicating the ID of a sidelink logical channel group, and the like.

The information indicating the sidelink measurement configuration includes information indicating the frequency at which the sidelink measurement is performed, information indicating a filter coefficient applied to the sidelink measurement, information indicating the interval at which the result of the sidelink measurement is reported, information indicating a threshold used to determine whether to report the result of the sidelink measurement, information indicating a duration used to determine whether to report the result of the sidelink measurement, and the like.

The terminal apparatus 1 notifies the base station apparatus 3 of the information related to the sidelink by the RRC signaling. The information related to the sidelink includes information indicating the frequency in which the terminal apparatus 1 is interested for receiving sidelink communication, information indicating the frequency in which the terminal apparatus 1 is interested for transmitting sidelink communication, information indicating a parameter for requesting a sidelink transmission resource, information regarding the sidelink capability, information indicating a cast type (broadcast, groupcast, unicast) for requesting the sidelink resource, information indicating a Destination Identity, information regarding sidelink QoS, information indicating the RLC mode, information indicating a list of synchronization references used for the terminal apparatus 1, and the like.

The medium access control layer processing unit (MAC layer processing unit) 35 generates MAC CEs (SCell Activation/Deactivation MAC CEs) indicating activation/deactivation of the secondary cell. The medium access control layer processing unit (MAC layer processing unit) 35 generates a MAC CE indicating activation/deactivation of the secondary cell to multiple serving cells configured by the radio resource control layer processing unit 36. The medium access control layer processing unit (MAC layer processing unit) 35 deactivates the secondary cell based on the timer. The medium access control layer processing unit (MAC layer processing unit) 35 determines, based on measurement using the timer, that the serving cell has not been scheduled for a certain period of time, deactivates the serving cell, and controls the radio transmission and/or reception unit 30.

The functionality of the radio transmission and/or reception unit 30 is similar to the functionality of the radio transmission and/or reception unit 10 and description thereof will thus be omitted as appropriate. The radio transmission and/or reception unit 30 performs processing of the physical layer. Here, the processing of the physical layer may include some or all of generation of a baseband signal of a physical channel, generation of a baseband signal of a physical signal, detection of information conveyed by the physical channel, and detection of information conveyed by the physical signal. The processing of the physical layer may include processing of mapping a transport channel to the physical channel. Here, the baseband signal is also referred to as a time-continuous signal.

The radio transmission and/or reception unit 30 may perform one or both of demodulation processing and decoding processing. The radio transmission and/or reception unit 30 may deliver, to the higher layer on the UL-SCH, a transport block included in the information detected based on the demodulation processing and the decoding processing on a received physical signal. For example, the radio transmission and/or reception unit 30 may generate a baseband signal of a downlink physical channel. Here, a transport block delivered by a higher layer on the DL-SCH may be mapped to the downlink physical channel. For example, the radio transmission and/or reception unit 30 may generate a baseband signal of a downlink physical signal.

The radio transmission and/or reception unit 30 may perform a part or all of modulation processing, encoding processing, and transmission processing. The radio transmission and/or reception unit 30 may generate a physical signal based on a part or all of encoding processing, modulation processing, and baseband signal generation processing for a transport block. The radio transmission and/or reception unit 30 may map a physical signal to a certain BWP. The radio transmission and/or reception unit 30 may transmit a generated physical signal. For example, the radio transmission and/or reception unit 30 may attempt to detect information conveyed on an uplink physical channel. Here, a transport block included in the information conveyed by the uplink physical channel may be delivered to a higher layer on the UL-SCH. For example, the radio transmission and/or reception unit 30 may attempt to detect information conveyed on an uplink physical signal.

The radio transmission and/or reception unit 30 recognizes a search space (SS) configured in the terminal apparatus 1. The radio transmission and/or reception unit 30 recognizes the search space in the control resource set configured in the terminal apparatus 1. The radio transmission and/or reception unit 30 recognizes the PDCCH candidate monitored in the terminal apparatus 1 and recognizes the search space. The radio transmission and/or reception unit 30 recognizes which control channel element constitutes each PDCCH candidate monitored in the terminal apparatus 1 (recognizes the number of the control channel element constituting the PDCCH candidate). The radio transmission and/or reception unit 30 includes an SS recognition unit, and the SS recognition unit recognizes the SS configured in the terminal apparatus 1. The SS recognition unit recognizes one or more PDCCH candidates in the control resource set configured as a Search space of the terminal apparatus. The SS recognition unit recognizes the PDCCH candidates (the number of PDCCH candidates, the numbers of the PDCCH candidates) configured in the search space of the control resource set of the terminal apparatus 1.

The SS recognition unit recognizes the configuration of the search space in the control resource set (the number of PDCCH candidates, the OFDM symbols for the PDCCH candidates, and the Aggregation level of the PDCCH candidates). The transmitter (transmission processing unit) of the radio transmission and/or reception unit 30 transmits the PDCCH to the terminal apparatus 1 using the PDCCH candidate in the search space of the control resource set.

The transmitter (also referred to as a transmission processing unit) of the base station apparatus 3 transmits the PDCCH. The transmission processing unit of the base station apparatus 3 transmits the PDCCH using the PDCCH candidate for which monitoring is performed in the terminal apparatus 1. The transmission processing unit of the base station apparatus 3 transmits the PDCCH using the resource corresponding to the PDCCH candidate in the search space set for the terminal apparatus 1. The transmission processing unit of the base station apparatus 3 transmits the PDCCH using the PDCCH candidate in the search space monitored for the PDCCH in the terminal apparatus 1 among the multiple search spaces configured for the terminal apparatus 1.

The receiver (also referred to as a reception processing unit) of the base station apparatus 3 receives the HARQ-ACK. The reception processing unit of the base station apparatus 3 receives the HARQ-ACK for the PDSCH. The reception processing unit of the base station apparatus 3 receives the HARQ-ACK in the uplink frequency band (cell, component carrier, carrier). The reception processing unit of the base station apparatus 3 receives the HARQ-ACK for the PDSCH in the downlink frequency band (cell, component carrier, carrier) managed in the base station apparatus 3.

The receiver of the base station apparatus 3 receives the sidelink HARQ-ACK from the terminal apparatus 1. The terminal apparatus 1 uses the PUCCH to transmit, to the base station apparatus 3, the information of the sidelink HARQ-ACK acquired from the PSFCH received from the communication partner terminal apparatus 1 via the sidelink.

In the deactivated serving cell, the radio transmission and/or reception unit 30 stops various reception processing operations and various transmission processing operations. For example, the radio transmission and/or reception unit 30 stops transmission of the PDCCH in the deactivated serving cell. For example, the radio transmission and/or reception unit 30 stops transmission of the PDSCH in the deactivated serving cell. For example, the radio transmission and/or reception unit 30 stops reception of the SRS in the deactivated serving cell. For example, the radio transmission and/or reception unit 30 stops reception of the PUSCH in the deactivated serving cell.

The RF unit 32 may convert a signal received via the antenna unit 31 into a baseband signal (basebandsignal) to remove unnecessary frequency components from the signal. The RF unit 32 outputs the baseband signal to the baseband unit 33.

The baseband unit 33 may digitize the baseband signal received from the RF unit 32. The baseband unit 33 may remove a portion of the digitized baseband signal corresponding to a Cyclic Prefix (CP). The baseband unit 33 may perform a Fast Fourier Transform (FFT) on the baseband signal from which the CP has been removed to extract a signal in the frequency domain.

The baseband unit 33 may generate a baseband signal by performing Inverse Fast Fourier Transform (Inverse Fast FourierTransform, IFFT) on the physical signal. The baseband unit 33 may add the CP to the generated baseband signal. The baseband unit 33 may convert the baseband signal to which the CP is added into an analog signal. The baseband unit 33 may output the converted analog baseband signal to the RF unit 32.

The RF unit 32 may remove unnecessary frequency components from the baseband signal received from the baseband unit 33. The RF unit 32 may generate an RF signal by upconverting the baseband signal to a carrier frequency. The RF unit 32 may transmit an RF signal via the antenna unit 31. The RF unit 32 may have a function of controlling transmission power.

Each of the units denoted by the reference sign 10 to the reference sign 16 included in the terminal apparatus 1 may be configured as a circuit. Each of the units denoted by the reference sign 30 to the reference sign 36 included in the base station apparatus 3 may be configured as a circuit.

In the following, physical channels and physical signals according to various aspects of the present embodiment will be described.

The physical signal is a general term for a downlink physical channel, a downlink physical signal, an uplink physical channel, and an uplink physical channel. The physical channel is a general term for a downlink physical channel and an uplink physical channel. The physical signal is a general term for a downlink physical signal and an uplink physical signal.

The uplink physical channel may correspond to a set of resource elements for carrying information that is generated in a higher layer. The uplink physical channel is a physical channel used in the uplink component carrier. The uplink physical channel may be transmitted by the radio transmission and/or reception unit 10. The uplink physical channel may be received by the radio transmission and/or reception unit 30. In the radio communication system according to an aspect of the present embodiment, at least a part or all of the following uplink physical channels are used.
- Physical Uplink Control CHannel (PUCCH)
- Physical Uplink Shared CHannel (PUSCH)
- Physical Random Access CHannel (PRACH)

The PUCCH may be used to transmit (convey) Uplink Control Information (UCI). The uplink control information may be mapped to the PUCCH. The radio transmission and/or reception unit 10 may transmit the PUCCH to which the uplink control information is mapped. The radio transmission and/or reception unit 30 may receive the PUCCH to which the uplink control information is mapped.

The uplink control information (uplink control information bit, uplink control information sequence, uplink control information type) includes a part or all of Channel State Information (CSI), a Scheduling Request (SR), and Hybrid Automatic Repeatrequest (Hybrid Automatic Repeatrequest ACKnowledgement, HARQ-ACK) information. Note that the uplink control information may include information that is not described above.

The channel state information is also referred to as a channel state information bit or a channel state information sequence. The scheduling request is also referred to as a scheduling request bit or a scheduling request sequence. The HARQ-ACK information is also referred to as a HARQ-ACK information bit or a HARQ-ACK information sequence.

The HARQ-ACK information may include a HARQ-ACK bit corresponding to one Transport block (TB). The HARQ-ACK bit may indicate an acknowledgement (ACK) or a negative-acknowledgement (NACK) corresponding to the transport block. The ACK may indicate that decoding of the transport block has been decoded successfully. The NACK may indicate that decoding of the transport block has not been decoded successfully. The HARQ-ACK information may include one or multiple HARQ-ACK bits.

A HARQ-ACK for the transport block is referred to as a HARQ-ACK for the PDSCH. Here, the "HARQ-ACK for the PDSCH" may indicate the HARQ-ACK for the transport block included in the PDSCH.

The scheduling request may be used for requesting resources of the UL-SCH for initial transmission. The scheduling request bit may be used for indicating either of a positive SR or a negative SR. The scheduling request bit indicating the positive SR is also referred to as "the positive SR being transmitted (conveyed)". The positive SR may indicate that the terminal apparatus 1 requests resources of the UL-SCH for initial transmission. The scheduling request bit indicating the negative SR is also referred to as "the negative SR being transmitted (conveyed)". The negative SR may indicate that the terminal apparatus 1 requests no resources of the UL-SCH for initial transmission.

Channel state information may include a part or all of a Channel Quality Indicator (CQI), a Precoder Matrix Indicator (PMI), and a Rank Indicator (RI). The CQI is an indicator related to quality (for example, propagation strength) of a propagation path or quality of a physical channel, and the PMI is an indicator related to a precoder. The RI is an indicator related to a transmission rank (or the number of transmission layers).

The channel state information is an indicator related to a reception state of a physical signal (for example, CSI-RS) used for channel measurement. The channel state information may be determined by the terminal apparatus 1 based on the reception state assumed by the physical signal used for channel measurement. Channel measurement may include interference measurement.

The PUCCH may have a certain PUCCH format. Here, the PUCCH format may be the form of processing in the physical layer for the PUCCH. The PUCCH format may be the form of information transmitted by using the PUCCH.

The PUSCH may be transmitted for conveying one or both of the uplink control information and the transport block. The PUSCH may be used for conveying one or both of the uplink control information and the transport block. The PUSCH may be used to transmit at least some or all of the transport block, the HARQ-ACK, the channel state information, and the scheduling request. The PUSCH is used at least to transmit a random access message 3. The PUSCH may be used for transmitting information that is not described above. The terminal apparatus 1 may transmit the PUSCH to which one or both of the uplink control information and the transport block are mapped. The base station apparatus 3 may receive the PUSCH to which one or both of the uplink control information and the transport block are mapped.

The PRACH may be transmitted for conveying the index of a random access preamble (random access message 1). The terminal apparatus 1 may transmit the PRACH. The base station apparatus 3 may receive the PRACH. The terminal apparatus 1 may transmit the random access preamble on the PRACH. The base station apparatus 3 may receive the random access preamble on the PRACH.

The uplink physical signal may correspond to a set of resource elements. The uplink physical signal need not be used to convey information generated in a higher layer. Note that the uplink physical signal may be used to convey information generated in a physical layer. The uplink physical signal may be a physical signal used in the uplink component carrier. The radio transmission and/or reception unit 10 may transmit the uplink physical signal. The radio transmission and/or reception unit 30 may receive the uplink physical signal. In the uplink of the radio communication system according to an aspect of the present embodiment, a part or all of the following uplink physical signals may be used.
- UpLink Demodulation Reference Signal (UL DMRS)
- Sounding Reference Signal (SRS)
- UpLink Phase Tracking Reference Signal (UL PTRS)

The UL DMRS is a general term for a DMRS for the PUSCH and a DMRS for the PUCCH.

A set of antenna ports of the DMRS for the PUSCH (DMRS related to the PUSCH, DMRS included in the PUSCH, DMRS corresponding to the PUSCH) may be given based on a set of antenna ports for the PUSCH. For example, the set of antenna ports of the DMRS for the PUSCH may be the same as a set of antenna ports of the PUSCH.

A propagation path of the PUSCH may be inferred from the DMRS for the PUSCH.

A set of antenna ports of the DMRS for the PUCCH (DMRS related to the PUCCH, DMRS included in the PUCCH, DMRS corresponding to the PUCCH) may be the same as a set of antenna ports of the PUCCH.

A propagation path of the PUCCH may be inferred from the DMRS for the PUCCH.

The downlink physical channel may correspond to a set of resource elements for conveying information generated in a higher layer. The downlink physical channel may be a physical channel used in a downlink component carrier. The radio transmission and/or reception unit 30 may transmit the downlink physical channel. The radio transmission and/or reception unit 10 may receive the downlink physical channel. In the downlink of the radio communication system according to an aspect of the present embodiment, a part or all of the following downlink physical channels may be used.
- Physical Broadcast Channel (PBCH)
- Physical Downlink Control Channel (PDCCH)
- Physical Downlink Shared Channel (PDSCH)

The PBCH is transmitted for conveying one or both of a Master Information Block (MIB) and physical layer control information. Here, the physical layer control information is information generated in the physical layer. The MIB is an RRC message delivered by the higher layer on a Broadcast Control CHannel (BCCH).

The PDCCH is used at least to transmit (convey) Downlink Control Information (DCI). The downlink control information may be mapped to the PDCCH. The terminal apparatus 1 may receive the PDCCH to which the downlink control information is mapped. The base station apparatus 3 may transmit the PDCCH to which the downlink control information is mapped.

The downlink control information may be transmitted with a DCI format. Note that the DCI format may also be interpreted to be in the format of downlink control information. The DCI format may be interpreted as a set of downlink control information set to a certain format of downlink control information.

The base station apparatus 3 may notify the terminal apparatus 1 of the downlink control information by using the PDCCH in the DCI format. The terminal apparatus 1 may monitor the PDCCH in order to acquire the downlink control information. Note that the DCI format and the downlink control information may be described as equivalent unless otherwise specified. For example, the base station apparatus 3 may include the downlink control information in the DCI format and transmit the DCI format to the terminal apparatus 1. The terminal apparatus 1 may control the radio transmission and/or reception unit 10 by using the downlink control information included in the detected DCI format.

The downlink control information may include at least either a downlink (DL) grant or an uplink (UL) grant. The DCI format used for scheduling the PDSCH is also referred to as a downlink DCI format. The DCI format used for scheduling the PUSCH is also referred to as an uplink DCI format. The downlink grant is also referred to as downlink (DL) assignment or downlink (DL) allocation.

A DCI format 0_0, a DCI format 0_1, a DCI format 1_0, a DCI format 1_1, and the like are DCI formats. An uplink DCI format is a general term for the DCI format 0_0, the DCI format 0_1, and the like. A downlink DCI format is a general term for the DCI format 1_0, the DCI format 1_1, and the like.

The DCI format 0_0 is used for scheduling of the PUSCH mapped to a certain cell. DCI format 0_0 includes at least some or all of 1A to 1E.
1A) DCI format identification field (Identifier for DCI formats field)
1B) Frequency domain resource assignment field
1C) Time domain resource assignment field
1D) Frequency hopping flag field
1E) Modulation and Coding Scheme (MCS) field

The identifier field for DCI formats may indicate whether the DCI format including the identifier field for DCI formats is an uplink DCI format or a downlink DCI format. In other words, each of the uplink DCI format and the downlink DCI format may include the identifier field for DCI formats. Here, the identifier field for DCI formats included in the DCI format 0_0 may indicate 0.

The frequency domain resource assignment field included in the DCI format 0_0 may be used for indicating assignment of frequency resources for the PUSCH scheduled by the DCI format 0_0.

The time domain resource assignment field included in the DCI format 0_0 may be used for indicating assignment of time resources for the PUSCH scheduled by the DCI format 0_0.

The frequency hopping flag field may be used to indicate whether frequency hopping is to be applied to the PUSCH scheduled by the DCI format 0_0.

An MCS field included in the DCI format 0_0 may be used for indicating one or both of a modulation scheme for the PUSCH scheduled by the DCI format 0_0 and a target encoding rate scheduled by the DCI format 0_1. The target encoding rate may be a target encoding rate for the transport block mapped to the PUSCH. The Transport Block Size (TBS) of the PUSCH mapped to the PUSCH may be determined based on a part or all of the target encoding rate and the modulation scheme for the PUSCH.

The DCI format 0_0 need not include a field used for a CSI request. The DCI format 0_0 need not include a carrier indicator field. The DCI format 0_0 need not include the BWP field.

The DCI format 0_1 is used for scheduling of the PUSCH mapped to a certain cell. The DCI format 0_1 includes a part or all of fields listed from 2A to 2H.
2A) Identifier field for DCI formats
2B) Frequency domain resource assignment field
2C) Time domain resource assignment field:
   2D) Frequency hopping flag field
   2E) MCS field
   2F) CSI request field
   2G) BWP field
   2H) UL DAI field (downlink assignment index)

The identifier field for DCI formats included in the DCI format 0_1 may indicate 0.

The frequency domain resource assignment field included in the DCI format 0_1 may be used for indicating assignment of frequency resources for the PUSCH scheduled by the DCI format 0_1.

The time domain resource assignment field included in the DCI format 0_1 may be used for indicating assignment of time resources for the PUSCH scheduled by the DCI format 0_1.

An MCS field included in the DCI format 0_1 may be used for indicating one or both of a modulation scheme for the PUSCH scheduled by the DCI format 0_1 and the target encoding rate for the PUSCH scheduled by the DCI format 0_1.

The CSI request field may be used for indicating the report of the CSI.

The BWP field of the DCI format 0_1 may be used for indicating an uplink BWP to which the PUSCH scheduled by the DCI format 0_1 is mapped. In other words, the DCI format 0_1 may or may not be accompanied by a change in the active uplink BWP. The terminal apparatus 1 may recognize the uplink BWP to which the PUSCH is mapped based on detection of the DCI format 0_1 used for scheduling of the PUSCH.

In a case that the DCI format 0_1 includes the carrier indicator field, the carrier indicator field may be used for indicating the serving cell of the uplink component carrier to which the PUSCH is mapped. Based on detection of the DCI format 0_1 in the downlink component carrier of a certain serving cell, the terminal apparatus 1 may recognize that the PUSCH scheduled by the DCI format 0_1 is mapped to the uplink component carrier of the serving cell indicated by a carrier indicator field included in the DCI format 0_1.

In a case that the DCI format 0_1 does not include the carrier indicator field, then for the uplink component carrier to which the PUSCH scheduled by the DCI format 0_1 is mapped, the serving cell to which this uplink component carrier belongs may be the same as the serving cell of the downlink component carrier to which the PDCCH including the DCI format 0_1 is mapped. Based on detection of the DCI format 0_1 in a certain downlink component carrier of a certain serving cell, the terminal apparatus 1 may recognize that the PUSCH scheduled by the DCI format 0_1 is mapped to the uplink component carrier of the certain serving cell.

The UL DAI field is used at least for indicating a transmission state of the PDSCH. In a case that a Dynamic HARQ-ACK codebook is used, the size of the UL DAI field may be 2 bits. The UL DAI field indicates the size of the HARQ-ACK codebook transmitted on the PUSCH. The UL DAI field indicates the number of HARQ-ACKs included in the HARQ-ACK codebook transmitted on the PUSCH. The UL DAI field indicates the number of PDSCHs in which the corresponding HARQ-ACK is included in the HARQ-ACK codebook transmitted on the PUSCH. The UL DAI field indicates the number of PDSCHs and SPS releases in which the corresponding HARQ-ACK is included in the HARQ-ACK codebook transmitted on the PUSCH.

The UL DAI field may indicate a value to which a modulo operation is applied. An example in which the UL DAI field is 2 bits will be described. In a case that the number of PDSCHs in which the corresponding HARQ-ACK is included in the HARQ-ACK codebook transmitted on the PUSCH is 0, "00" is indicated as the UL DAI field. In a case that the number of PDSCHs in which the corresponding HARQ-ACK is included in the HARQ-ACK codebook transmitted on the PUSCH is 1, "01" is indicated as the UL DAI field. In a case that the number of PDSCHs in which the corresponding HARQ-ACK is included in the HARQ-ACK codebook transmitted on the PUSCH is 2, "10" is indicated as the UL DAI field. In a case that the number of PDSCHs in which the corresponding HARQ-ACK is included in the HARQ-ACK codebook transmitted on the PUSCH is 3, "11" is indicated as the UL DAI field. In a case that the number of PDSCHs in which the corresponding HARQ-ACK is included in the HARQ-ACK codebook transmitted on the PUSCH is 4, "00" is indicated as the UL DAI field. In a case that the number of PDSCHs in which the corresponding HARQ-ACK is included in the HARQ-ACK codebook transmitted on the PUSCH is 5, "01" is indicated as the UL DAI field. In a case that the number of PDSCHs in which the corresponding HARQ-ACK is included in the HARQ-ACK codebook transmitted on the PUSCH is 6, "10" is indicated as the UL DAI field. In a case that the number of PDSCHs in which the corresponding HARQ-ACK is included in the HARQ-ACK codebook transmitted on the PUSCH is 7, "11" is indicated as the UL DAI field. In this example, a modulo operation using the value '4' is performed on the number of PDSCHs in which the corresponding HARQ-ACK is included in the HARQ-ACK codebook transmitted on the PUSCH.

The terminal apparatus 1 interprets the UL DAI field in consideration of the total number of received PDSCHs. For example, the terminal apparatus 1 has received four PDSCHs and receives the UL DAI field indicating "00". In this case, the terminal apparatus 1 interprets that the number of PDSCHs in which the corresponding HARQ-ACK is included in the HARQ-ACK codebook transmitted on the PUSCH is 4, which is indicated by the UL DAI field. For example, the terminal apparatus 1 has received three PDSCHs and receives the UL DAI field indicating "00". In this case, the terminal apparatus 1 interprets that the number of PDSCHs in which the corresponding HARQ-ACK is included in the HARQ-ACK codebook transmitted on the PUSCH is 4, which is indicated by the UL DAI field is four. The terminal apparatus 1 determines to have failed to receive one PDSCH.

The DCI format 1_0 is used for scheduling of the PDSCH mapped to a certain cell. The DCI format 1_0 includes a part or all of 3A to 3F.
3A) Identifier field for DCI formats
3B) Frequency domain resource assignment field
3C) Time domain resource assignment field
3D) MCS field
3E) PDSCH_HARQ feedback timing indicator field (PDSCH to HARQfeedback timing indicator field)
3F) PUCCH resource indicator field

The identifier field for DCI formats included in the DCI format 1_0 may indicate 1.

The frequency domain resource assignment field included in the DCI format 1_0 may be used for indicating assignment of frequency resources for the PDSCH scheduled by the DCI format.

The time domain resource assignment field included in the DCI format 1_0 may be used for indicating assignment of time resources for the PDSCH scheduled by the DCI format.

The MCS field included in the DCI format 1_0 may be used for indicating one or both of the modulation scheme for the PDSCH scheduled by the DCI format and the target encoding rate for the PDSCH scheduled by the DCI format. The target encoding rate may be a target encoding rate for the transport block mapped to the PDSCH. The Transport Block Size (TBS) of the PDSCH mapped to the PDSCH may be determined based on one or both of the target encoding rate and the modulation scheme for the PDSCH.

The PDSCH_HARQ feedback timing indicator field may be used for indicating an offset from the slot including the last OFDM symbol of the PDSCH to the slot including the first OFDM symbol of the PUCCH. The PDSCH-to-HARQ feedback timing indicator field may be a field indicating a timing K1. In a case that the index of the slot including the last OFDM symbol of the PDSCH is a slot n, the index of the slot including the PUCCH or the PUSCH including at least HARQ-ACK corresponding to the transport block included in the PDSCH may be n + K1. In a case that the index of the slot including the last OFDM symbol of the PDSCH is a slot n, the index of the slot including the OFDM symbol at the head of the PUCCH or the OFDM symbol at the head of the PUSCH including at least HARQ-ACK corresponding to the transport block included in the PDSCH may be n + K1.

The PDSCH_HARQ feedback timing indicator field may be hereinafter referred to as a PDSCH-to-HARQ_feedback timing indicator field or a HARQ indicator field.

The PUCCH resource indicator field may be used to indicate a resource of the PUCCH.

The DCI format 1_1 is used for scheduling of the PDSCH mapped to a certain cell. The DCI format 1_1 includes a part or all of 4A to 4I.
4A) Identifier field for DCI formats
4B) Frequency domain resource assignment field
4C) Time domain resource assignment field
4E) MCS field
4F) PDSCH_HARQ feedback timing indicator field
4G) PUCCH resource indicator field
4H) BWP field
4I) Carrier indicator field

The identifier field for DCI formats included in the DCI format 1_1 may indicate 1.

The frequency domain resource assignment field included in the DCI format 1_1 may be used for indicating assignment of frequency resources for the PDSCH scheduled by the DCI format 1_1.

The time domain resource assignment field included in the DCI format 1_1 may be used for indicating assignment of time resources for the PDSCH scheduled by the DCI format 1_1.

The MCS field included in the DCI format 1_1 may be used for indicating one or both of the modulation scheme for the PDSCH scheduled by the DCI format 1_1 and the target encoding rate for the PDSCH scheduled by the DCI format 1_1.

In a case that the DCI format 1_1 includes the PDSCH_HARQ feedback timing indicator field, the PDSCH_HARQ feedback timing indicator field may be used for indicating an offset from the slot including the last OFDM symbol of the PDSCH to the slot including the first OFDM symbol of the PUCCH. In a case that the DCI format 1_1 does not include the PDSCH_HARQ feedback timing indicator field, a parameter indicating an offset from the slot including the last OFDM symbol of the PDSCH to the slot including the first OFDM symbol of the PUCCH may be provided by an RRC layer.

The PUCCH resource indicator field may be used to indicate a resource of the PUCCH.

The BWP field of the DCI format 1_1 may be used to indicate the downlink BWP to which the PDSCH scheduled by the DCI format 1_1 is mapped. In other words, the DCI format 1_1 may or may not be accompanied by a change in the active downlink BWP. The terminal apparatus 1 may recognize the downlink BWP to which the PDSCH is mapped based on detection of the DCI format 1_1 used for the scheduling of the PDSCH.

The DCI format 1_1 not including the BWP field may be a DCI format for scheduling the PDSCH without changing the active downlink BWP. The terminal apparatus 1 may recognize that the PDSCH is received without switching the active downlink BWP based on detection of the DCI format 1_1 which is used for the scheduling of the PDSCH and does not include the BWP field.

In a case that the DCI format 1_1 includes the carrier indicator field, the carrier indicator field may be used for indicating the serving cell of the downlink component carrier to which the PDSCH scheduled by the DCI format 1_1 is mapped. Based on detection of the DCI format 1_1 in the downlink component carrier of a certain serving cell, the terminal apparatus 1 may recognize that the PDSCH scheduled by the DCI format 1_1 is mapped to the downlink component carrier of the serving cell indicated by the carrier indicator field included in the DCI format 1_1.

In a case that the DCI format 1_1 does not include the carrier indicator field, the downlink component carrier to which the PDSCH scheduled by the DCI format 1_1 is mapped may be the same as the downlink component carrier to which the PDCCH including the DCI format 1_1 is mapped. Based on detection of the DCI format 1_1 in a certain downlink component carrier, the terminal apparatus 1 may recognize that the PDSCH scheduled by the DCI format 1_1 is mapped to the downlink component carrier.

The downlink grant is used at least for scheduling a single PDSCH in a single serving cell. The downlink grant is at least used for the scheduling of the PDSCH in the same slot as the slot in which the downlink grant is transmitted. The downlink grant may be used for scheduling of the PDSCH within a slot different from the slot in which the downlink grant has been transmitted. The uplink grant is used at least for scheduling a single PUSCH in a single serving cell.

Note that various DCI formats may further include fields different from the fields described above. The DCI formats may include a field indicating the cumulative number of PDCCHs transmitted (Counter Downlink Assignment Index (C-DAI) field). The DCI formats may include a field indicating the total number of PDCCHs transmitted (Total Downlink Assignment Index (T-DAI) field).

The PDSCH may be used for conveying the transport block. The PDSCH may be used for conveying the transport block. The transport block may be mapped to the PDSCH. The base station apparatus 3 may transmit the PDSCH to which the transport block is mapped. The terminal apparatus 1 may receive the PDSCH to which the transport block is mapped.

The downlink physical signal may correspond to a set of resource elements. The downlink physical signal need not be used to convey information generated in the higher layer. Note that the downlink physical signal may be used to convey information generated in the physical layer. The downlink physical signal may be a physical signal used in the downlink component carrier. The radio transmission and/or reception unit 10 may transmit the downlink physical signal. The radio transmission and/or reception unit 30 may transmit the downlink physical signal. In the downlink of the radio communication system according to an aspect of the present embodiment, at least a part or all of the following downlink physical signals may be used.
- Synchronization signal (SS)
- DownLink DeModulation Reference Signal (DL DMRS)
- Channel State Information-Reference Signal (CSI-RS)
- DownLink Phase Tracking Reference Signal (DL PTRS)

The synchronization signal is used by the terminal apparatus 1 to establish synchronization with a downlink frequency domain and/or time domain. The synchronization signal is a general term for the Primary Synchronization Signal (PSS) and the Secondary Synchronization Signal (SSS).

An SS block (SS/PBCH block) includes at least some or all of the PSS, the SSS, and the PBCH.

The PSS, the SSS, the PBCH, and the antenna port of the DMRS for the PBCH may be the same.

The PBCH over which the symbol of the PBCH on a certain antenna port is conveyed may be inferred from the DMRS for the PBCH mapped to the slot to which the PBCH is mapped and for the PBCH included in the SS/PBCH block including the PBCH.

The DL DMRS is a general term for a DMRS for the PBCH, a DMRS for the PDSCH, and a DMRS for the PDCCH.

A set of antenna ports of the DMRS for the PDSCH (DMRS related to the PDSCH, DMRS included in the PDSCH, DMRS corresponding to the PDSCH) may be given based on a set of antenna ports for the PDSCH. For example, the set of antenna ports of the DMRS for the PDSCH may be the same as the set of antenna ports for the PDSCH.

A propagation path of the PDSCH may be inferred from the DMRS for the PDSCH. In a case that a set of resource elements in which the symbol of a certain PDSCH is conveyed and a set of resource elements in which the symbol of the DMRS for the certain PDSCH is conveyed are included in the same Precoding Resource Group (PRG), the PDSCH over which the symbol of the PDSCH on a certain antenna port is conveyed may be inferred from the DMRS for the PDSCH.

The antenna port of the DMRS for the PDCCH (DMRS related to the PDCCH, DMRS included in the PDCCH, DMRS corresponding to the PDCCH) may be the same as the antenna port for the PDCCH.

A propagation path of the PDCCH may be inferred from the DMRS for the PDCCH. In a case that the same precoder is (assumed to be) applied to a set of resource elements in which the symbol of a certain PDCCH is conveyed and a set of resource elements in which the symbol of the DMRS for the certain PDCCH is conveyed, the PDCCH over which the symbol of the PDCCH on a certain antenna port is conveyed may be inferred from the DMRS for the PDCCH.

A Broadcast CHannel (BCH), an Uplink-Shared CHannel (UL-SCH), and a Downlink-Shared CHannel (DL-SCH) are transport channels.

The BCH of the transport layer may be mapped to the PBCH of the physical layer. In other words, a transport block delivered by the higher layer on the BCH of the transport layer may be mapped to the PBCH of the physical layer. The UL-SCH of the transport layer may be mapped to the PUSCH of the physical layer.

The transport layer may apply the Hybrid Automatic Repeat reQuest (HARQ) to the transport block.

A Broadcast Control CHannel (BCCH), a Common Control CHannel (CCCH), and a Dedicated Control CHannel (DCCH) are logical channels. For example, the BCCH may be used for delivery of an RRC message including an MIB or an RRC message including system information. The CCCH may be used for transmitting an RRC message including an RRC parameter that is common to multiple terminal apparatuses 1. Here, the CCCH may be, for example, used for the terminal apparatus 1 that is not in a state of RRC connection. The DCCH may be used for transmitting an RRC message dedicated to a certain terminal apparatus 1. Here, the DCCH may be, for example, used for the terminal apparatus 1 that is in a state of RRC connection.

The BCCH may be mapped to the BCH or the DL-SCH. In other words, the RRC message including the information of the MIB may be delivered to the BCH. The RRC message including the system information other than the MIB may be delivered to the DL-SCH. The CCCH is mapped to the DL-SCH or the UL-SCH. In other words, the RRC message mapped to the CCCH may be delivered to the DL-SCH or the UL-SCH. The DCCH may be mapped to the DL-SCH or the UL-SCH. In other words, the RRC message mapped to the DCCH may be delivered to the DL-SCH or the UL-SCH.

The UL-SCH may be mapped to the PUSCH. The DL-SCH may be mapped to the PDSCH. The BCH may be mapped to the PBCH.

The medium access control layer processing unit 15 may perform a random access procedure.

For example, the downlink control information including the downlink grant or the uplink grant is transmitted and/or received on the PDCCH, along with a Cell-Radio Network Temporary Identifier (C-RNTI).

One physical channel may be mapped to one serving cell. A single physical channel may be mapped to a single BWP configured to a single carrier included in a single serving cell.

In the terminal apparatus 1, one or multiple Control Resource SETs (CORESETs) may be configured. The terminal apparatus 1 monitors the PDCCH in the one or multiple control resource sets. Here, monitoring of the PDCCH in the one or multiple control resource sets may include monitoring of one or multiple PDCCHs corresponding to the one or multiple control resource sets, respectively. Note that the PDCCH may include a set of one or multiple PDCCH candidates and/or one or multiple PDCCH candidates. Also, monitoring of the PDCCH may include monitoring and detecting the PDCCH and/or a DCI format transmitted via the PDCCH.

Multiple control resource sets may be configured for the terminal apparatus 1 and an index (control resource set index) may be provided for each of the control resource sets. One or more control channel elements (CCEs) may be configured in the control resource set and an index (CCE index) may be provided for each of the CCEs.

A set of PDCCH candidates monitored by the terminal apparatus 1 may be defined in terms of a search space. In other words, the set of PDCCH candidates monitored by the terminal apparatus 1 is provided by a search space.

The search space may include one or multiple PDCCH candidates of one or multiple Aggregation levels. The aggregation level of the PDCCH candidates may indicate the number of CCEs constituting the PDCCH. The PDDCH candidate may be mapped to one or multiple CCEs.

The search space set may at least include one or multiple search spaces. An index (search space index) may be provided for each of the search spaces.

Each search space set may be associated at least with one control resource set. Each search space set may be included in one control resource set. For each of the search space sets, the index of the control resource set related to the search space set may be given.

The terminal apparatus 1 can detect the PDCCH and/or the DCI for the terminal apparatus 1 by blindly detecting the PDCCH candidate included in the search space in the control resource set.

In various aspects of the present embodiment, the number of resource blocks indicates the number of resource blocks in the frequency domain unless otherwise specified.

The terminal apparatus 1 transmits the uplink control information (UCI) to the base station apparatus 3. The terminal apparatus 1 may multiplex the UCI to the PUCCH and transmit the PUCCH. The terminal apparatus 1 may multiplex the UCI to the PUSCH and transmit the PUSCH. The UCI may include at least one of downlink Channel State Information (CSI), a Scheduling Request (SR) indicating a request for a PUSCH resource, and Hybrid Automatic Repeat request ACKnowledgement (HARQ-ACK) for downlink data (a Transport block, a Medium Access Control Protocol Data Unit (MAC PDU), a Downlink-Shared Channel (DL-SCH), a Physical Downlink Shared Channel (PDSCH)).

The HARQ-ACK may also be referred to as an ACK/NACK, HARQ feedback, HARQ-ACK feedback, a HARQ response, a HARQ-ACK response, HARQ information, HARQ-ACK information, HARQ control information, and HARQ-ACK control information.

In a case that data is successfully decoded, an ACK for the data is generated. In a case that data is not successfully decoded, a NACK for the data is generated. The HARQ-ACK may include at least a HARQ-ACK bit corresponding at least to one transport block. The HARQ-ACK bit may indicate an ACKnowledgement (ACK) or a Negative-ACKnowledgement (NACK) corresponding to one or multiple transport blocks. The HARQ-ACK may include at least a HARQ-ACK codebook including one or multiple HARQ-ACK bits. The fact that the HARQ-ACK bit corresponds to one or multiple transport blocks may mean that the HARQ-ACK bit corresponds to the PDSCH including the one or multiple transport blocks.

HARQ control for one transport block may be referred to as a HARQ process. One HARQ process identifier may be provided for each HARQ process. The DCI format includes a field indicating a HARQ process identifier (HARQ process number).

For each HARQ process, a New Data Indicator (NDI) is indicated in the DCI format. For example, the NDI field is included in the DCI format (DL assignment) including the scheduling information of the PDSCH. The size of the NDI field is 1 bit. The terminal apparatus 1 stores the value of the NDI for each HARQ process. The base station apparatus 3 stores the value of the NDI for each HARQ process for each terminal apparatus 1. The terminal apparatus 1 updates the value of the NDI stored using the NDI field in the detected DCI format. The base station apparatus 3 configures, in the NDI field of the DCI format, the updated value of the NDI or the value of the NDI that is not updated and transmits the DCI format to the terminal apparatus 1. For the HARQ process corresponding to the value of the HARQ process identifier field of the detected DCI format, the terminal apparatus 1 updates the value of the NDI stored using the NDI field of the detected DCI format.

The terminal apparatus 1 determines whether the received transport block is newly transmitted or retransmitted based on the value of the NDI field of the DCI format (DL assignment). In a case that the value of the NDI field of the detected DCI format is toggled in comparison with the value of the previously received NDI for a transport block of a certain HARQ process, the terminal apparatus 1 determines the transport block received to have been newly transmitted. In a case of transmitting a transport block for new transmission in a certain HARQ process, the base station apparatus 3 toggles the value of the NDI stored for the HARQ process and transmits the toggled NDI to the terminal apparatus 1. In a case of transmitting a transport block for retransmission in the certain HARQ process, the base station apparatus 3 does not toggle the value of the NDI stored for the HARQ process and transmits, to the terminal apparatus 1, the NDI that is not toggled. In a case that the value of the NDI field of the detected DCI format is not toggled (remains the same) in comparison with the value of the previously received NDI for a transport block of a certain HARQ process, the terminal apparatus 1 determines the transport block received to have been retransmitted. Note that here, "to toggle" means to switch to a different value.

The terminal apparatus 1 may report HARQ-ACK information to the base station apparatus 3 by using the HARQ-ACK codebook in the slot indicated by a value of the HARQ indicator field included in DCI format 1_0 or DCI format 1_1 corresponding to PDSCH reception.

For DCI format 1_0, the value of the HARQ indicator field may be mapped to a set of the number of slots (1, 2, 3, 4, 5, 6, 7, 8). For DCI format 1_1, the value of the HARQ indicator field may be mapped to the set of the number of slots provided by a higher layer parameter dl-DataToUL-ACK. The number of slots indicated based at least on the value of the HARQ indicator field may also be referred to as HARQ-ACK timing or K1. For example, the HARQ-ACK indicating a decoding state of the PDSCH (downlink data) transmitted in the slot n may be reported (transmitted) in the slot n+K1.

dl-DataToUL-ACK indicates a list of timings of the HARQ-ACK for the PDSCH. The timing is the number of slots from the slot in which the HARQ-ACK for the received PDSCH is transmitted, with reference to the slot in which the PDSCH is received (or the slot including the last OFDM symbol to which the PDSCH is mapped). For example, dl-DataToUL-ACK is a list of one, two, three, four, five, six, seven, or eight timings. In a case that Dl-DataToUL-ACK is a list of one timing, the HARQ indicator field is 0 bits. In a case that Dl-DataToUL-ACK is a list of two timings, the HARQ indicator field is 1 bit. In a case that Dl-DataToUL-ACK is a list of three or four timings, the HARQ indicator field is 2 bits. In a case that Dl-DataToUL-ACK is a list of five, six, seven, or eight timings, the HARQ indicator field is 3 bits. For example, dl-DataToUL-ACK includes a list of timings of any value in the range from 0 to 31. For example, dl-DataToUL-ACK includes a list of timings of any value in the range from 0 to 63.

The size of dl-DataToUL-ACK is defined as the number of elements included in dl-DataToUL-ACK. The size of Dl-DataToUL-ACK may be referred to as Lₚₐᵣₐ. The index of dl-DataToUL-ACK indicates the order (number) of the element of dl-DataToUL-ACK. For example, in a case that the size of dl-DataToUL-ACK is 8 (Lₚₐᵣₐ = 8), the index of dl-DataToUL-ACK is any value of 1, 2, 3, 4, 5, 6, 7, or 8. The index of dl-DataToUL-ACK may be provided, may be represented, or may be indicated by a value indicated by the HARQ indicator field.

The terminal apparatus 1 may configure the size of the HARQ-ACK codebook according to the size of dl-DataToUL-ACK. For example, in a case that dl-DataToUL-ACK includes eight elements, the size of the HARQ-ACK codebook is 8. For example, in a case that dl-DataToUL-ACK includes two elements, the size of the HARQ-ACK codebook is 2. Each of the pieces of HARQ-ACK information constituting the HARQ-ACK codebook is HARQ-ACK information for PDSCH reception at each slot timing of dl-DataToUL-ACK. This type of HARQ-ACK codebook is also referred to as Semi-static HARQ-ACK codebook.

The terminal apparatus 1 may report the HARQ-ACK information for PDSCH reception in the slot n using PUCCH transmission and/or PUSCH transmission in the slot n + k. Here, k may be the number of slots indicated by the HARQ indicator field included in the DCI format corresponding to the PDSCH reception. Further, in a case that the HARQ indicator field is not included in the DCI format, k may be provided by the higher layer parameter dl-DataToUL-ACK.

The terminal apparatus 1 determines a set of multiple occasions for one or more candidate PDSCH receptions on which corresponding HARQ-ACK information is transmitted on the PUCCH in a certain slot. The terminal apparatus 1 determines multiple slots at the slot timing K1 included in the dl-DataToUL-ACK to be multiple occasions for candidate PDSCH receptions. K1 may be a set of ks. For example, in a case that dl-DataToUL-ACK is (1, 2, 3, 4, 5, 6, 7, 8), on the PUCCH in a slot n, HARQ-ACK information is transmitted for a PDSCH reception in a slot n-1, for a PDSCH reception in a slot n-2, for a PDSCH reception in a slot n-3, for a PDSCH reception in a slot n-4, for a PDSCH reception in a slot n-5, for a PDSCH reception in a slot n-6, for a PDSCH reception in a slot n-7, and for a PDSCH reception in a slot n-8. In a case of actually receiving the PDSCH in the slot corresponding to the candidate PDSCH reception, the terminal apparatus 1 configures the ACK or the NACK as the HARQ-ACK information based on the transport block included in the PDSCH. In a case of receiving no PDSCH in the slot corresponding to the candidate PDSCH reception, the terminal apparatus 1 configures the NACK as the HARQ-ACK information.

The HARQ-ACK codebook may be provided based at least on some or all of a set of monitoring occasions for the PDCCH and the value of a counter DAI field. The HARQ-ACK codebook may be provided based on the value of the UL DAI field. The HARQ-ACK codebook may be provided based on the value of the DAI field. The HARQ-ACK codebook may be provided based on the value of the total DAI field.

The size of the HARQ-ACK codebook may be configured based on the value of the counter DAI field in the last received DCI format. The counter DAI field indicates the cumulative number of PDSCHs or transport blocks scheduled before reception of the corresponding DCI format. The size of the HARQ-ACK codebook may be configured based on the value of the total DAI field in the DCI format. The total DAI field indicates the total number of PDSCHs or transport blocks scheduled before transmission of the HARQ-ACK codebook.

The terminal apparatus 1 may determine a set of monitoring occasions for the PDCCH for the HARQ-ACK information transmitted on the PUCCH mapped to the slot having index n (slot #n), based at least on some or all of a value of a timing K1 and a value of a slot offset K0. The set of monitoring occasions for the PDCCH for the HARQ-ACK information transmitted on the PUCCH mapped to the slot having index n is also referred to as a set of monitoring occasions for the PDCCH for the slot n (monitoring occasion for PDCCH for slot #n). Here, the set of monitoring occasions for the PDCCH includes M monitoring occasions for the PDCCH. For example, the slot offset K0 may be indicated based at least on a value of the time domain resource allocation field included in a downlink DCI format. The slot offset K0 is a value indicating the number of slots (difference of slots) from a slot including the last OFDM symbol to which the PDCCH including a DCI format including the time domain resource allocation field indicating the slot offset K0 is mapped to the first OFDM symbol of the PDSCH scheduled by the DCI format.

In a case that the DCI format detected in any one monitoring occasion for the search space set corresponding to a certain monitoring occasion for the PDCCH triggers (includes information that triggers) transmission of the HARQ-ACK information in the slot n, the terminal apparatus 1 may determine the monitoring occasion for the PDCCH as the PDCCH monitoring occasion for the slot n. In a case that the DCI format detected in the monitoring occasion for the search space set corresponding to a certain monitoring occasion for the PDCCH does not trigger (does not include information that triggers) transmission of the HARQ-ACK information in the slot n, the terminal apparatus 1 need not determine the monitoring occasion for the PDCCH as the PDCCH monitoring occasion for the slot n. In a case that the DCI format is not detected in the monitoring occasion for the search space set corresponding to a certain monitoring occasion for the PDCCH, the terminal apparatus 1 need not determine the monitoring occasion for the PDCCH as the PDCCH monitoring occasion for the slot n.

In the M monitoring occasions for the PDCCH, for a certain monitoring occasion for the PDCCH in a certain serving cell, a Counter DAI indicates the cumulative number of the PDCCHs detected before the monitoring occasion for the PDCCH in the serving cell (the cumulative number may alternatively be a value at least related to the cumulative number). The counter DAI may also be referred to as a C-DAI. The C-DAI corresponding to the PDSCH may be indicated by the field included in the DCI format used for scheduling of the PDSCH. The total DAI may indicate a cumulative number of the PDCCHs detected before the monitoring occasion m for the PDCCH in the M monitoring occasions for the PDCCH (the cumulative number may alternatively be a value at least related to the cumulative number). The total DAI may be referred to as a Total Downlink Assignment Index (T-DAI).

The physical channel is a general term for a sidelink physical channel and a sidelink physical signal. The physical channel is a general term for a sidelink physical channel. The physical signal is a general term for a sidelink physical signal.

The sidelink physical channel may correspond to a set of resource elements for carrying information generated in a higher layer. The sidelink physical channel is a physical channel used in sidelink. The sidelink physical channel may be transmitted by the radio transmission and/or reception unit 10. The sidelink physical channel may be transmitted by the radio transmission and/or reception unit 10. In the radio communication system according to an aspect of the present embodiment, at least a part or all of the following sidelink physical channels are used.
- Physical Sidelink Broadcast CHannel (PSBCH)
- Physical Sidelink Control CHannel (PSCCH)
- Physical Sidelink Shared CHannel (PSSCH)
- PSFCH (Physical Sidelink Feedback CHannel)

The PSBCH is transmitted in order to convey a Direct Frame Number (DFN), a TDD UL-DL configuration, a slot index (the slot index of a slot in which the PSBCH is allocated), and an in-coverage indicator (an identifier indicating whether the transmitting terminal apparatus 1 is located within the coverage of the base station apparatus 3).

The PSCCH is used at least to transmit (convey) Sidelink Control Information (SCI). The sidelink control information may be mapped to the PSCCH. The terminal apparatus 1 may receive the PSCCH to which the downlink control information is mapped. The terminal apparatus 1 may transmit the PSCCH to which the sidelink control information is mapped.

The sidelink control information is transmitted and/or received in the form of a sidelink control information format (SCI format). The SCI transmitted and/or received in the PSCCH is referred to as 1^{st} stage SCI. The SCI transmitted and received on the PSSCH is referred to as a 2^{nd} stage SCI. The 1^{st} stage SCI format may include an SCI format 1-A. The SCI format 1-A is used for scheduling the PSSCH and the 2^{nd} stage SCI. The SCI format 1-A includes a field indicating priority, a field indicating frequency-resource allocation, a field indicating time-resource allocation, a field indicating a resource reservation duration, a field indicating a DM RS pattern, a field indicating a 2^{nd} stage SCI format (SCI format 2-A, SCI format 2-B), a field indicating the β offset (a parameter used to determine a resource amount for the 2^{nd} stage SCI), a field indicating the number of DM RS ports, a field indicating the MCS, a field indicating the MCS table, and a field including a PSFCH overhead indication.

The 2^{nd} stage SCI is used for decoding the PSSCH. The SCI format 2-A includes information of the HARQ process number, the NDI, a Redundancy version (RV), a Source ID, a Destination ID, a HARQ feedback enable/disable indicator, a cast type indicator (unicast, broadcast, groupcast), and a CSI request. The SCI format 2-B includes information of the HARQ process number, the NDI, the RV, the Source ID, the Destination ID, the HARQ feedback enable/disable indicator, a Zone ID, and a communication range request.

The PSSCH may be transmitted to convey sidelink data (sidelink transport block, sidelink PDU) and 2^{nd} stage SCI. The PSSCH may be used to convey sidelink data and 2^{nd} stage SCI. The terminal apparatus 1 may transmit the PSSCH to which the sidelink data and the 2^{nd} stage SCI are mapped. The terminal apparatus 1 may receive the PSSCH to which the sidelink data and the 2^{nd} stage SCI are mapped.

The PSFCH may be used for conveying HARQ-ACK information corresponding to PSSCH reception. The terminal apparatus 1 may transmit the PSFCH to which the HARQ-ACK information is mapped. The terminal apparatus 1 may receive the PSFCH to which the HARQ-ACK information is mapped.

The sidelink physical signal may correspond to a set of resource elements. The sidelink physical signal need not be used to convey information generated in a higher layer. Note that the sidelink physical signal may be used to convey information generated in a physical layer. The radio transmission and/or reception unit 10 may transmit the sidelink physical signal. The radio transmission and/or reception unit 10 may transmit the sidelink physical signal. In the sidelink of the radio communication system according to an aspect of the present embodiment, at least a part or all of the following sidelink physical signals may be used.
- Sidelink Synchronization Signal (S-SS)
- Sidelink DM RS
- Sidelink CSI-RS
- Sidelink PT-RS

The sidelink synchronization signal is used by the terminal apparatus 1 to establish synchronization with a sidelink frequency domain and/or time domain. The sidelink synchronization signal is a general term for a Sidelink Primary Synchronization Signal (S-PSS) and a Sidelink Secondary Synchronization Signal (S-SSS).

The sidelink DM RS is a general term for a DM RS for the PSBCH, a DM RS for the PSCCH, and a DM RS for the PSSCH. The time domain pattern of the DM RS for the PSSCH is selected by the transmitting terminal apparatus 1. A time domain pattern for selection candidates is configured for each resource pool.

The sidelink CSI-RS is a reference signal used for sidelink channel measurement. Time resource allocation (symbol position for allocation), frequency resource allocation, the number of antenna ports, and the number of layers for the CSI-RS are configured. The terminal apparatus 1 uses the MAC CE to report the channel state information measured based on the sidelink CSI-RS.

The sidelink PT-RS may be supported only in a high-frequency band (FR2). The time density and frequency density of the sidelink PT-RS are configured for each resource pool.

A signal for Access Gain Control (AGC) may be used. The signal for AGC may be allocated in the first OFDM symbol of a slot (first slot, second slot).

The terminal apparatus 1 may report the sidelink HARA-ACK information received from the transmission destination terminal apparatus 1 to the base station apparatus 3 using the uplink PUCCH. The Semi-static HARQ-ACK codebook or the Dynamic HARQ-ACK codebook may be used.

The base station apparatus 3 may notify the terminal apparatus 1 of sidelink scheduling information using the DCI format. The DCI format 3_0 is used for scheduling of the PSCCH and the PSSCH. The DCI format 3_0 includes a part or all of the following information.
- Resource pool index
- Time gap
- HARQ process number
- NDI
- Subchannel allocation information
- SCI format 1_A field
- Timing indicator for feeding back the HARQ-ACK of the PSSCH corresponding to PSFCH reception, and a PUCCH resource indicator
- Configuration index
- Sidelink allocation index counter

The resource pool index indicates a resource pool used for the PSCCH and PSSCH to be scheduled. The time gap indicates a time from in a case that DCI format 3_0 is received to in a case that sidelink transmission is performed. The subchannel allocation information indicates subchannels used for the PSCCH and PSSCH to be scheduled. The SCI format 1_A field includes information of frequency resource allocation and time resource allocation of the SCI format 1_A transmitted by the terminal apparatus 1 on the PSCCH. The timing indicator for feeding back the HARQ-ACK of the PSSCH corresponding to the PSFCH reception indicates a timing at which the terminal apparatus 1 uses the PUCCH to feed back the HARQ-ACK information acquired by receiving the PSFCH from the partner terminal apparatus 1. The PUCCH resource indicator indicates a resource of the PUCCH used for feeding back the HARQ-ACK information acquired by receiving the PSFCH. The configuration index indicates a configuration of the sidelink Configured grant. The sidelink allocation index counter indicates the number of sidelink allocations provided to the terminal apparatus 1 by the base station apparatus 3 within a certain duration.

In order to use an unlicensed spectrum, a prescribed constraint needs to be satisfied. For example, according to the regulation of the European Telecommunications Standards Institute (ETSI), with respect to the usage of 5GHz, which is one of the unlicensed spectra, an Occupied Channel Bandwidth (OCB) including 99% of the power of the signal must be 80% or more of the available bandwidth (e.g., system bandwidth, bandwidth of an LBT subband, bandwidth of a subband). A constraint on a maximum Power Spectral Density (PSD) per prescribed bandwidth (1 MHz) is defined.

In order to satisfy such a constraint (for example, the OCB regulation), transmission (interlaced transmission) using a set of multiple frequency domain resources (also referred to as an interlace, an RB set, or the like) at prescribed intervals is performed on an unlicensed carrier. One interlace may be defined as a set of frequency-domain resources allocated at prescribed intervals (e.g., 10 RB intervals).

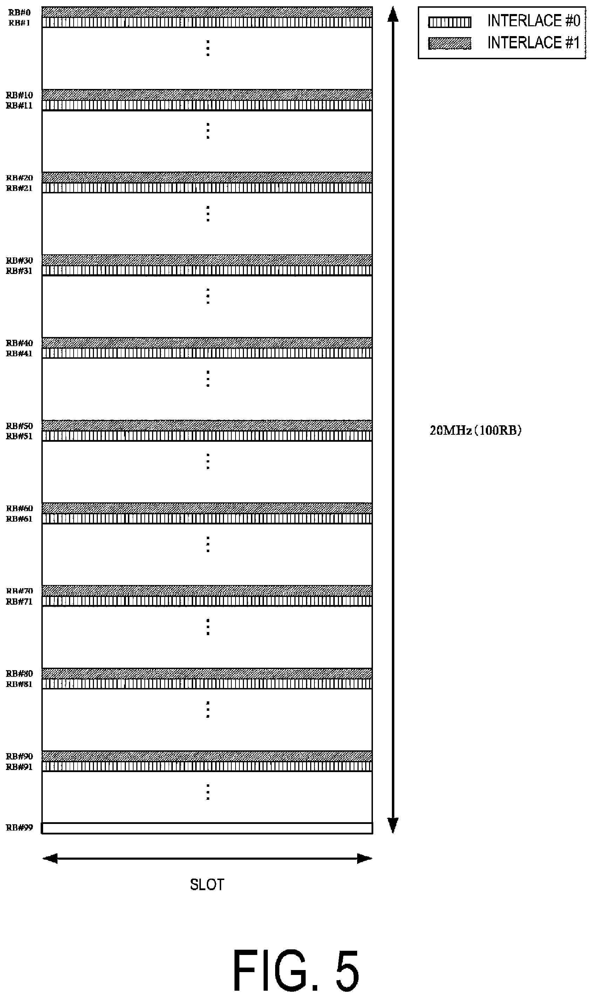

FIG. 5 is a diagram illustrating an example of interlaced mapping according to an aspect of the present embodiment. Here, a case in which the total available bandwidth is 20 MHz and 100 RBs will be described. An interlace #I includes 10 RBs having index values {i, i + 10, i + 20, ..., i + 90}. An interlace includes multiple RBs at frequency intervals of 10 RBs. In a case that the total available bandwidth includes 20 MHz, ten interlaces #0 to #9 are provided.

Although the case where the subcarrier spacing is 15 kHz has been described with reference to FIG. 5, the resource blocks constituting the interlace may have a different frequency interval in a case that the subcarrier spacing is 30 kHz. The 20-MHz bandwidth includes 50 RBs and one interlace includes 10 RBs. In this case, five interlaces #0 to #4 are provided. In this case, the interlace #I includes 10 RBs having index values {i, i + 5, i + 10, ..., i + 45}. One interlace includes multiple RBs at frequency intervals of 5 RBs.

One subchannel may include one or more interlaces. The subchannel indices and the interlace indices may be associated with one another in ascending order.

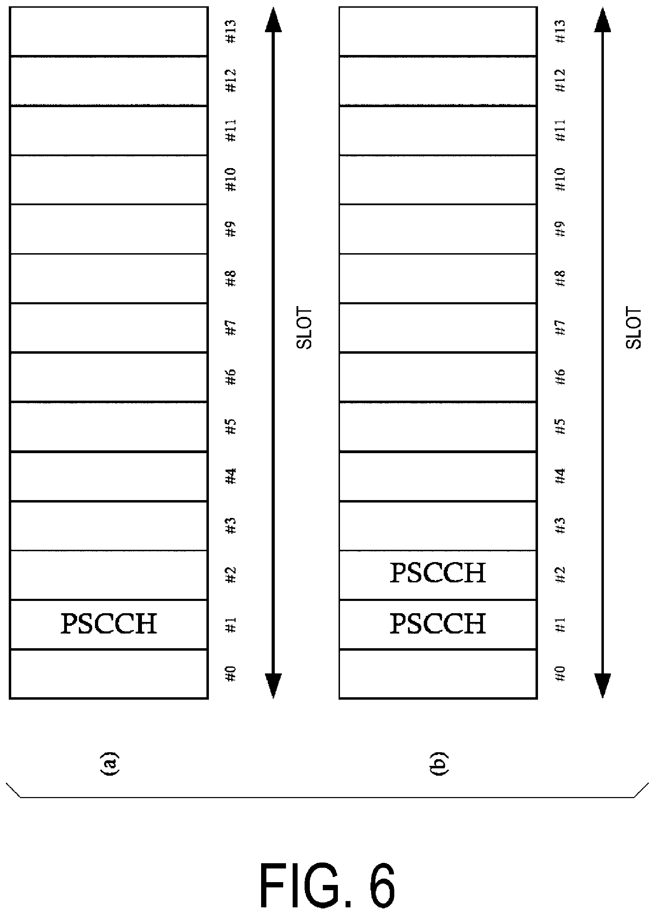

FIG. 6 is a diagram illustrating allocation of PSCCHs monitored in the terminal apparatus 1 according to an aspect of the present embodiment. One slot includes 14 OFDM symbols (#0, #1, #2, #3, #4, #5, #6, #7, #8, #9, #10, #11, #12, and #13). FIG. 6(a) illustrates a case where the PSCCH is monitored in the second OFDM symbol (#1). The PSCCH is monitored in a specific subchannel (e.g., a subchannel with the smallest subchannel index) of the second OFDM symbol. In a case of succeeding in detecting PSCCH, the terminal apparatus 1 receives the PSSCH in another subchannel of the second OFDM symbol and receives the PSSCH and the DM RS in the third and subsequent OFDM symbols. FIG. 6(b) illustrates a case where the PSCCH is monitored in the second and third OFDM symbols #1 and #2. The PSCCH is monitored in a specific subchannel (e.g., a subchannel having the smallest subchannel index) of the second and third OFDM symbols. In a case of succeeding in detecting the PSCCH, the terminal apparatus 1 receives the PSSCH in other subchannels of the second and third OFDM symbols. The terminal apparatus 1 receives the PSSCH and the DM RS in the fourth and subsequent OFDM symbols. Note that, in FIG. 6(b), one PSCCH is intended to be monitored in the second and third OFDM symbols and that monitoring of two PSCCHs is not intended.

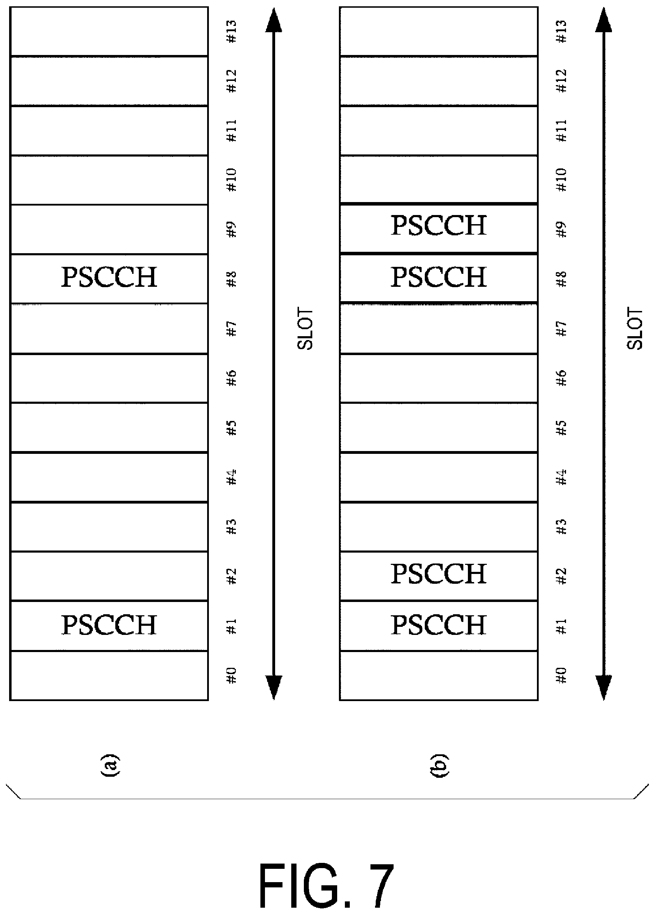

FIG. 7 is a diagram illustrating an example of allocation of PSCCHs monitored in the terminal apparatus 1 according to an aspect of the present embodiment. One slot includes 14 OFDM symbols (#0, #1, #2, #3, #4, #5, #6, #7, #8, #9, #10, #11, #12, and #13). FIG. 7(a) illustrates a case in which the PSCCH is monitored in a maximum of the second OFDM symbol (#1) and the ninth OFDM symbol (#8). The PSCCH is monitored in a specific subchannel (e.g., a subchannel with the smallest subchannel index) of the second OFDM symbol. In a case of succeeding in detecting the PSCCH in the second OFDM symbol, the terminal apparatus 1 receives the PSSCH in another subchannel of the second OFDM symbol, receives the PSSCH and the DM RS in the third and subsequent OFDM symbols, and does not monitor the PSCCH in the ninth OFDM symbol. In a case of failing to detect the PSCCH in the second OFDM symbol, the terminal apparatus 1 monitors the PSCCH in a specific subchannel of the ninth OFDM symbol. In a case of succeeding in detecting the PSCCH in the ninth OFDM symbol, the terminal apparatus 1 receives the PSSCH in another subchannel of the ninth OFDM symbol and receives the PSSCH and the DM RS in the tenth and subsequent OFDM symbols.

FIG. 7(b) illustrates a case in which the PSCCH is monitored in a maximum of the second and third OFDM symbols (#1 and #2) and the ninth and tenth OFDM symbols (#8 and #9). The PSCCH is monitored in a specific subchannel (e.g., a subchannel having the smallest subchannel index) of the second and third OFDM symbols. In a case of succeeding in detecting the PSCCH in the second and third OFDM symbols, the terminal apparatus 1 receives the PSSCH in other subchannels of the second and third OFDM symbols, receives the PSSCH and the DM RS in the fourth and subsequent OFDM symbols, and does not monitor the PSCCH in the ninth and tenth OFDM symbols. In a case of failing to detect the PSCCH in the second and third OFDM symbols, the terminal apparatus 1 monitors the PSCCH in the specific subchannels of the ninth and tenth OFDM symbols. In a case of succeeding in detecting the PSCCH in the ninth and tenth OFDM symbols, the terminal apparatus 1 receives the PSSCH in other subchannels of the ninth and tenth OFDM symbols, and receives the PSSCH and the DM RS in the eleventh and subsequent OFDM symbols. Note that, in FIG. 7(b), one PSCCH is intended to be monitored in the second and third OFDM symbols and that monitoring of two PSCCHs is not intended. Note that, in FIG. 7(b), one PSCCH is intended to be monitored in the ninth and tenth OFDM symbols and that monitoring of two PSCCHs is not intended.

Before signal transmission (channel access), the terminal apparatus 1 performs channel sensing (carrier sensing) in order to check whether there is a transmission from another equipment (for example, the base station apparatus, the terminal apparatus, a WiFi terminal apparatus, a WiFi access point, or the like). The terminal apparatus 1 randomly generates a backoff counter value within the range of the contention window size (CWS) after the last signal transmission. The terminal apparatus 1 waits until a channel (LBT subband, RB set. For example, a band of a 20-MHz bandwidth) is confirmed idle, and then performs the carrier sense for each sensing slot time. In a case that the channel is idle, the terminal apparatus 1 sequentially decreases the counter value determined at random within the contention window size (CWS), obtains the access right to the channel after the counter value becomes 0, and then performs signal transmission. After the signal transmission is ended, the terminal apparatus 1 that performs communication using the HARQ-ACK feedback updates the contention window size based on the HARQ-ACK feedback received from the terminal apparatus 1 to which the signal has been transmitted. In a case that the status of the HARQ-ACK is ACK, the terminal apparatus 1 configures the minimum value for the contention window size. In a case that the status of the HARQ-ACK is NACK, the terminal apparatus 1 configures the next larger value for the contention window size. In a case that the contention window size reaches the maximum configurable value, the terminal apparatus 1 continues to use the maximum value even in a case that the status of the HARQ-ACK is NACK.

In a case that the LBT result is idle, the terminal apparatus 1 acquires a Transmission opportunity (TxOP, Channel Occupancy) and performs transmission, and in a case that the LBT result is busy (LBT-busy), does not perform transmission. The time of the transmission opportunity is referred to as Channel Occupancy Time (COT). The COT is a total time length of all transmissions within the transmission opportunity and a gap within a prescribed time, and may be less than or equal to a maximum COT (MCOT). The MCOT may be determined based on a channel access priority class. The channel access priority class may be associated with the contention window size.

A channel access priority class is defined and used. For example, four channel access priority classes (channel access priority class 1, channel access priority class 2, channel access priority class 3, and channel access priority class 4) are defined and used. In the channel access priority class 1, the minimum contention window size is 3 slots, the maximum contention window size is 7 slots, and two allowed contention window sizes are 3 slots and 7 slots. In the channel access priority class 2, the minimum contention window size is 7 slots, the maximum contention window size is 15 slots, and two allowed contention window sizes are 7 slots and 15 slots. In the channel access priority class 3, the minimum contention window size is 15 slots, the maximum contention window size is 1023 slots, and seven allowed contention window sizes are 15 slots, 31 slots, 63 slots, 127 slots, 255 slots, 511 slots, and 1023 slots. In the channel access priority class 4, the minimum contention window size is 15 slots, the maximum contention window size is 1023 slots, and seven allowed contention window sizes are 15 slots, 31 slots, 63 slots, 127 slots, 255 slots, 511 slots, and 1023 slots. Note that the contention window size may represent a count number counted for each slot.

In a case of determining that the channel is busy by carrier sensing during a sensing slot time, the terminal apparatus 1 performs sensing as to whether the channel is idle in a defer duration. The defer duration includes 16 us and multiple sensing slots. The number of sensing slots constituting the defer duration depends on the channel access priority class. In the channel access priority class 1, approximately two sensing slots are included in the defer duration. In the channel access priority class 2, approximately two sensing slots are included in the defer duration. In the channel access priority class 3, approximately three sensing slots are included in the defer duration. In the channel access priority class 4, approximately seven sensing slots are included in the defer duration. In a case that the terminal apparatus 1 determines that the channel is busy in the defer duration, the terminal apparatus 1 again determines whether the channel is idle in a new defer duration. In a case of determining that the channel is idle in the defer duration, the terminal apparatus 1 decreases the counter value configured based on the contention window size, continues to perform the carrier sense for each sensing slot time, and determines whether the channel is idle.

Applying the contention window size to channel sensing may include using the contention window size to generate a backoff counter for channel sensing.

The fact that the terminal apparatus 1 applies the HARQ-ACK feedback enable in the sidelink transmission may include the HARQ-ACK feedback being indicated to the terminal apparatus 1 from the transmission destination terminal apparatus 1. The fact that the terminal apparatus 1 applies the HARQ-ACK feedback disable in the sidelink transmission may include the HARQ-ACK feedback not being indicated to the terminal apparatus 1 from the transmission destination terminal apparatus 1. The HARQ-ACK feedback enable/disable may be configured by using one of SCI format 2-A/2-B, sl-PSFCH-Period, and sl-HARQFeedbackEnabled.

The SCI format 2-A/2-B includes a 1-bit HARQ feedback enable/disable indicator field. Configuring 1 as the value of this field may cause the terminal apparatus 1 to apply HARQ-ACK feedback enable. Configuring 0 as the value of this field may cause the terminal apparatus 1 to apply HARQ-ACK feedback disable. sl-PSFCH-Period may be included in the configuration information of a certain resource pool. sl-PSFCH-Period indicates the periodicity of a PSFCH resource in the resource pool in units of slots, and may be configured as one of values of s10, sl1, sl2, and sl4. Configuring sl0 may cause the terminal apparatus 1 to apply HARQ-ACK feedback disable to all transmissions for the resource pool. Configuring sl1, sl2, or sl4 may cause the terminal apparatus 1 to apply HARQ-ACK feedback enable. sl-HARQ-FeedbackEnabled is a field indicating whether the base station apparatus 3 enables or disables the HARQ feedback on the sidelink logical channel. There are two types of parameters for sl-HARQ-FeedbackEnabled: enabled/disabled. Configuring enabled in sl-HARQ-FeedbackEnabled may cause HARQ-ACK feedback enable to be applied on the sidelink logical channel. Configuring disabled may cause HARQ-ACK feedback disable to be applied on the sidelink logical channel.

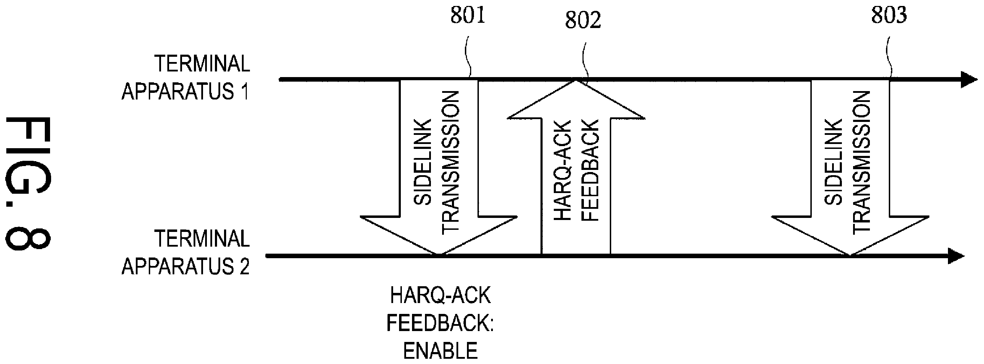

FIG. 8 is a diagram illustrating an example of sidelink transmission transmitted in the terminal apparatus 1 according to an aspect of the present embodiment. The terminal apparatus 1 may be any one of the terminal apparatuses 1A to 1D in FIG. 1. The terminal apparatus 2 may be any one of the terminal apparatuses 1A to 1D in FIG. 1 that is in sidelink communication with the terminal apparatus 1. 801 may be transmission applying HARQ-ACK feedback enable from the terminal apparatus 1 to the terminal apparatus 2. 802 may be HARQ-ACK feedback for the sidelink transmission 801. 803 may be sidelink transmission from the terminal apparatus 1 to the terminal apparatus 2 which is performed after 801. The terminal apparatus 1 may determine the contention window size before each of the sidelink transmissions 801 and 803. The terminal apparatus 1 may apply the determined contention window size to the channel sensing, and in a case that the channel sensing is successful, may perform the sidelink transmission.

The terminal apparatus 1 may determine the contention window size for the channel sensing before performing the first sidelink transmission. The terminal apparatus 1 may determine the contention window size based on the HARQ-ACK feedback of the second sidelink transmission to which the HARQ-ACK feedback enable performed before the first sidelink transmission is applied. The terminal apparatus 1 may configure the minimum contention window size in a case of receiving the ACK from the transmission destination terminal apparatus 1. The terminal apparatus 1 may configure the contention window size of the next larger value in a case of receiving the NACK from the transmission destination terminal apparatus 1. In a case of obtaining no result of the HARQ-ACK feedback, the terminal apparatus 1 may configure the next larger value for the contention window size in a case of performing transmission including retransmission. In a case of obtaining no result of the HARQ-ACK feedback, the terminal apparatus 1 may maintain the contention window size in a case of performing transmission not including retransmission. As an example, in a case of performing the sidelink transmission 801 in FIG. 8, the terminal apparatus 1 may update the contention window size before the sidelink transmission 803 based on the result of 802. In a case that 802 is ACK, the terminal apparatus 1 may configure the minimum value for the contention window size before the sidelink transmission 803. In a case that 802 is NACK, the terminal apparatus 1 may configure the next larger value for the contention window size before the sidelink transmission 803. In a case of failing to obtain 802, the terminal apparatus 1 may configure the next larger value for the contention window size before the sidelink transmission 803 in a case of performing transmission including retransmission. In a case of failing to obtain 802, the terminal apparatus 1 may maintain the contention window size before the sidelink transmission 803 in a case of performing transmission not including retransmission.

The terminal apparatus 1 may determine the contention window size for the channel sensing before performing the first sidelink transmission. The terminal apparatus 1 may determine the contention window size based on the first number of second sidelink transmissions to which the HARQ-ACK feedback disable is applied. The first number may be the number of second sidelink transmissions to which HARQ-ACK feedback disable is applied prior to performing the first sidelink transmission. The terminal apparatus 1 may configure the second number which is used as a threshold for determining the contention window size. The second number may be 1 or larger. The terminal apparatus 1 may determine the contention window size based on whether the first number is smaller than the second number. In a case that the first number is smaller than the second number, the contention window size may be maintained. In a case that the first number is not smaller than the second number, the terminal apparatus may update the contention window size. The terminal apparatus 1 may apply the maintained or updated contention window size to the channel sensing, and in a case that the channel sensing is successful, may perform the transmission.

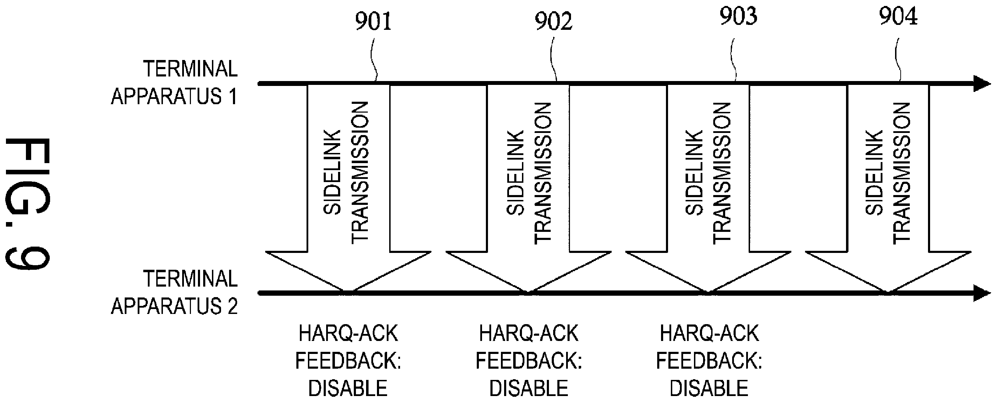

FIG. 9 is a diagram illustrating an example of sidelink transmission transmitted in the terminal apparatus 1 according to an aspect of the present embodiment. The terminal apparatus 1 may include any one of the terminal apparatuses 1A to 1D in FIG. 1. The terminal apparatus 2 may be any one of the terminal apparatuses 1A to 1D in FIG. 1 that is in sidelink communication with the terminal apparatus 1. 901 may be sidelink transmission to which the HARQ-ACK feedback disable from the terminal apparatus 1 to the terminal apparatus 2 is applied. 902 may be sidelink transmission performed after 901 and to which the HARQ-ACK feedback disable from the terminal apparatus 1 to the terminal apparatus 2 is applied. 903 may be sidelink transmission performed after 902 and to which the HARQ-ACK feedback disable from the terminal apparatus 1 to the terminal apparatus 2 is applied. 904 may be sidelink transmission from the terminal apparatus 1 to the terminal apparatus 2 which is performed after 903. The terminal apparatus 1 may determine the contention window size before each of the sidelink transmissions 901 to 904. The terminal apparatus 1 may apply the determined contention window size to the channel sensing, and in a case that the channel sensing is successful, may perform the sidelink transmission.

As an example, in FIG. 9, the terminal apparatus 1 configures three for the second number. The terminal apparatus 1 may perform the sidelink transmission 901. At this time, the first number is 1. Since the first number is smaller than the second number, the terminal apparatus 1 may maintain the contention window size for the channel sensing before performing the sidelink transmission 902, at the contention window size configured in 901. The terminal apparatus 1 may perform the sidelink transmission 902. At this time, the first number is 2. Since the first number is smaller than the second number, the terminal apparatus 1 may maintain the contention window size for the channel sensing before performing the sidelink transmission 903, at the contention window size configured in 902. The terminal apparatus 1 may perform the sidelink transmission 903. At this time, the first number is 3. Since the first number is not smaller than the second number, the terminal apparatus 1 may update the contention window size configured in 903 to the contention window size for the channel sensing before performing the sidelink transmission 904. The terminal apparatus 1 may apply the updated contention window size to the channel sensing. In a case that the channel sensing is successful, the terminal apparatus 1 may perform the sidelink transmission 904.

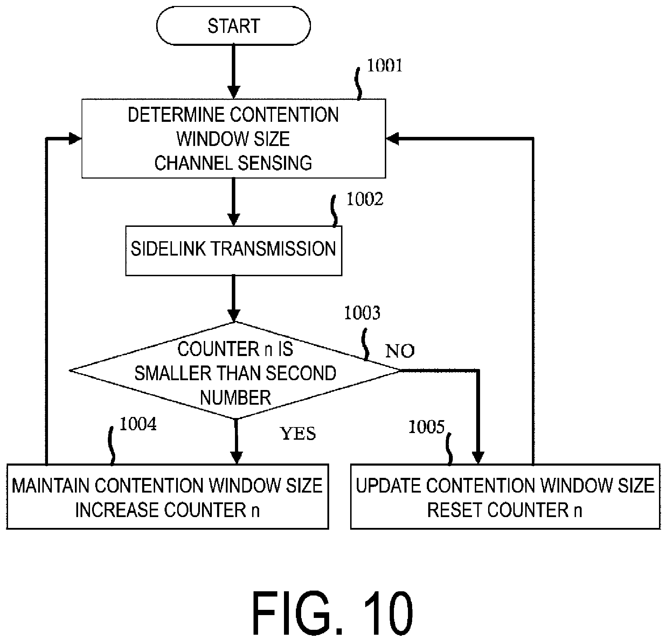

FIG. 10 is a diagram illustrating an example of configuration of the contention window size for the terminal apparatus according to an aspect of the present embodiment. The terminal apparatus 1 starts the sidelink transmission and may then determine the contention window size of the initial value and apply the determined contention window size to the channel sensing (step 1001). In a case that the channel sensing is successful, the terminal apparatus 1 may perform the sidelink transmission (step 1002). The terminal apparatus 1 may determine whether a counter n indicating the number of performed sidelink transmissions to which the HARQ-ACK feedback disable is applied is smaller than the second number (step 1003). In a case of determining that the counter n is smaller than the second number (step 1003: YES), the terminal apparatus 1 may maintain the contention window size and increase the counter n by 1 (step 1004). In a case of determining that the counter n is not smaller than the second number (step 1003: NO), the terminal apparatus 1 may update the contention window size and reset the counter n (step 1005). The processing may be repeated again starting in step 1001 for the next sidelink transmission. Note that whether the counter n-1 is smaller than the second number may be determined in step 1003.

The terminal apparatus 1 may configure the counter n that counts the first number. The terminal apparatus 1 may set the initial value of the counter n to 0. The terminal apparatus 1 may increase the counter n in a case of performing the sidelink transmission to which the HARQ-ACK feedback disable is applied. The terminal apparatus 1 may reset the counter n in a case that the contention window size is updated. As an example, in FIG. 10, in a case of performing the sidelink transmission to which the HARQ-ACK feedback disable is applied, the terminal apparatus 1 makes determination in 1003. In a case that the counter n is smaller than the second number, the terminal apparatus 1 proceeds to step 1004, maintains the contention window size, and increases the counter n by 1. In a case that the terminal apparatus 1 performs the sidelink transmission to which the HARQ-ACK feedback disable is applied, and that, in 1003, the counter n is determined not to be smaller than the second number, the terminal apparatus 1 may proceed to step 1005, update the contention window size, and reset the counter n. In a case that the cast type of the sidelink transmission is broadcast transmission, the terminal apparatus 1 may regard the sidelink transmission as the sidelink transmission to which the HARQ-ACK feedback disable is applied. That is, the sidelink transmission to which the HARQ-ACK feedback disable is applied by the terminal apparatus 1 may be sidelink transmission having a cast type of broadcast transmission.

The terminal apparatus 1 may reset the counter n to the initial value 0 in a case of performing the sidelink transmission to which the HARQ-ACK feedback enable is applied. The terminal apparatus 1 may maintain the count n in a case of performing the sidelink transmission to which the HARQ-ACK feedback enable is applied.

The terminal apparatus 1 may configure the counter n for each channel access priority class. The terminal apparatus 1 may set the counter n common to all the channel access priority classes. The terminal apparatus 1 may reset the counter n in a case of performing sidelink transmission of a different channel access priority class. The terminal apparatus 1 may maintain the counter n in a case of performing sidelink transmission of a different channel access priority class. As an example, in a case of configuring the counter n for each channel access priority class, the terminal apparatus 1 may allocate an independent counter n to each of the channel access priority class 1, the channel access priority class 2, the channel access priority class 3, and the channel access priority class 4. In a case of configuring the counter n common to all the channel access priority classes, the terminal apparatus 1 may allocate one counter n common to the channel access priority class 1, the channel access priority class 2, the channel access priority class 3, and the channel access priority class 4.

In a case of updating the contention window size, the terminal apparatus 1 may configure the next larger value for the contention window size. In a case of updating the contention window size, the terminal apparatus 1 may configure a preceding smaller value for the contention window size. In a case of updating the contention window size, the terminal apparatus 1 may configure the minimum contention window size. In a case of updating the contention window size, the terminal apparatus 1 may configure the maximum contention window size. In a case of updating the contention window size, the terminal apparatus 1 may randomly configure the contention window size. In a case of updating the maximum contention window size to the next larger value, the terminal apparatus 1 may configure the minimum contention window size. In a case of updating the minimum contention window size to a preceding smaller value, the terminal apparatus 1 may configure the maximum contention window size. In a case that the terminal apparatus 1 updates the contention window size by configuring the next larger value for the contention window size and that the maximum contention window size is reached, the terminal apparatus 1 may configure the minimum contention window size. In a case that the terminal apparatus 1 updates the contention window size by configuring the next smallest value for the contention window size and that the minimum contention window size is reached, the terminal apparatus 1 may configure the maximum contention window size. As an example, the terminal apparatus 1 is assumed to update the contention window size of 127 slots in the channel access priority class 4. In the channel access priority class 4, seven allowed contention window sizes include 15 slots, 31 slots, 63 slots, 127 slots, 255 slots, 511 slots, and 1023 slots. In a case of configuring the next larger value for the contention window size, the terminal apparatus 1 may configure 255 slots. In a case of configuring a preceding smaller value for the contention window size, the terminal apparatus 1 may configure 63 slots. In a case of configuring the minimum contention window size, the terminal apparatus 1 may configure 15 slots for the contention window size. In a case of configuring the maximum contention window size, the terminal apparatus 1 may configure 1023 slots for the contention window size. In a case of randomly configuring the contention window size, the terminal apparatus 1 may randomly configure a number of slots other than 127 slots from among 15 slots, 31 slots, 63 slots, 255 slots, 511 slots, and 1023 slots. In a case of configuring a preceding smaller value instead of the minimum contention window size of 15 slots, the terminal apparatus 1 may configure the maximum contention window size, that is, 1023 slots. In a case of configuring the next largest value instead of the maximum contention window size of 1023 slots, the terminal apparatus 1 may configure the minimum contention window size, that is, 15 slots.

The second number may be configured for each resource pool. The terminal apparatus 1 may be notified of information indicating the second number for each resource pool by the RRC signaling. The second number may be set for each channel access priority class. The terminal apparatus 1 may be notified of information indicating the second number for each channel access priority class by the RRC signaling. The second number may be configured for each terminal apparatus. The terminal apparatus 1 may be notified of information indicating the second number by the RRC signaling.

The terminal apparatus 1 may determine the contention window size for the channel sensing before performing the first sidelink transmission. In a case that the HARQ-ACK feedback disable is applied to the second sidelink transmission performed before the first sidelink transmission, the terminal apparatus 1 may randomly configure the contention window size for the first sidelink transmission. The terminal apparatus 1 may apply the randomly configured contention window size to the channel sensing, and in a case that the channel sensing is successful, may perform the first sidelink transmission. The terminal apparatus 1 may randomly set the contention window size applied in the sensing of the channel for the first sidelink transmission without including the contention window size applied in the sensing of the channel for the second sidelink transmission. The terminal apparatus 1 may randomly set the contention window size applied in the sensing of the channel for the first sidelink transmission including the contention window size applied in the sensing of the channel for the second sidelink transmission. The terminal apparatus 1 may apply the randomly configured contention window size to the channel sensing, and in a case that the channel sensing is successful, may perform the first sidelink transmission. As an example, the terminal apparatus 1 is assumed to apply the contention window size of 127 slots to the channel sensing in the channel access priority class 4 and to perform the second sidelink transmission. In a case that the contention window size applied to the channel sensing for the second sidelink transmission is not included in the contention window size for the channel sensing for the first sidelink transmission, the terminal apparatus 1 may randomly configure a number of slots other than 127 slots from among 15 slots, 31 slots, 63 slots, 255 slots, 511 slots, and 1023 slots other than 127 slots. In a case that the contention window size applied in the sensing of the channel of the second sidelink transmission is included in the contention window size for the sensing of the channel for the first sidelink transmission, the terminal apparatus 1 may randomly set 15 slots, 31 slots, 63 slots, 127 slots, 255 slots, 511 slots, and 1023 slots. The terminal apparatus 1 may apply the randomly configured contention window size to the channel sensing, and in a case that the channel sensing is successful, may perform the first sidelink transmission.

The terminal apparatus 1 may determine the contention window size for the channel sensing before performing the first sidelink transmission. The terminal apparatus 1 may determine the contention window size based on the third number with the contention window size maintained. In a case that the HARQ-ACK feedback disable is applied to the second sidelink transmission performed before the first sidelink transmission, the terminal apparatus 1 may maintain the contention window size applied to the channel sensing before the second sidelink transmission and may apply the contention window size to the channel sensing before the first sidelink transmission. The terminal apparatus 1 may configure the second number that is used as a threshold for determining the contention window size. The second number may be 1 or larger. The terminal apparatus 1 may determine the contention window size based on whether the third number is smaller than the second number. In a case that the third number is smaller than the second number of times, the contention window size may be maintained. In a case that the third number is not smaller than the second number, the terminal apparatus may update the contention window size. The terminal apparatus 1 may apply the maintained or updated contention window size to the channel sensing, and in a case that the channel sensing is successful, may perform the transmission.

As described above, the terminal apparatuses can communicate with each other with unfairness of channel access alleviated for the sidelink transmission with the HARQ-ACK feedback disabled.

A program running on the base station apparatus 3 and the terminal apparatus 1 according to one aspect of the present invention may be a program (program that causes a computer to function) that controls a Central Processing Unit (CPU) and the like, such that the program realizes the functions of the above-described embodiment according to one aspect of the present invention. The information handled in these apparatuses is temporarily loaded into a Random Access Memory (RAM) while being processed, is then stored in a Hard Disk Drive (HDD) and various types of Read Only Memory (ROM) such as a Flash ROM, and is read, modified, and written by the CPU, as necessary.

Note that the terminal apparatus 1 and the base station apparatus 3 according to the above-described embodiment may be partially implemented by a computer. In that case, this configuration may be implemented by recording a program for implementing such control functions on a computer-readable recording medium and causing a computer system to read the program recorded on the recording medium for execution.

Note that it is assumed that the "computer system" mentioned here refers to a computer system built into the terminal apparatus 1 or the base station apparatus 3, and the computer system includes an OS and hardware components such as peripheral devices. In addition, the "computer-readable recording medium" refers to a portable medium such as a flexible disk, a magneto-optical disk, a ROM, and a CD-ROM, and a storage apparatus such as a hard disk built into the computer system.

Moreover, the "computer-readable recording medium" may include a medium that dynamically retains the program for a short period of time, such as a communication wire that is used to transmit the program over a network such as the Internet or over a communication line such as a telephone line, and a medium that retains the program for a certain period of time, such as a volatile memory within the computer system which functions as a server or a client in a case that the program is transmitted via the communication wire. Furthermore, the aforementioned program may be configured to implement part of the functions described above, and also may be configured to be capable of implementing the functions described above in combination with a program already recorded in the computer system.

The terminal apparatus 1 may include at least one processor, and at least one memory including a computer program instruction (computer program). The memory and the computer program instruction (computer program) may adopt a configuration of causing the terminal apparatus 1 to perform the operation and the processing described in the above embodiment by using a processor. The base station apparatus 3 may include at least one processor, and at least one memory including a computer program instruction (computer program). The memory and the computer program instruction (computer program) may adopt a configuration of causing the base station apparatus 3 to perform the operation and the processing described in the above embodiment by using a processor.

Furthermore, the base station apparatus 3 according to the aforementioned embodiment may be implemented as an aggregation (apparatus group) including multiple apparatuses. Each of the apparatuses included in such an apparatus group may include a part or all of each function or each functional block of the base station apparatus 3 according to the aforementioned embodiment. As the apparatus group, it is only necessary to have all of functions or functional blocks of the base station apparatus 3. Moreover, the terminal apparatus 1 according to the aforementioned embodiment can also communicate with the base station apparatus as the aggregation.

Also, the base station apparatus 3 according to the aforementioned embodiment may be an Evolved Universal Terrestrial Radio Access Network (EUTRAN) and/or a NextGen RAN (NG-RAN or NR RAN). Moreover, the base station apparatus 3 according to the aforementioned embodiment may have a part or all of the functions of a higher node for an eNodeB and/or a gNB.

Also, a part or all portions of each of the terminal apparatus 1 and the base station apparatus 3 according to the aforementioned embodiment may be implemented as an LSI, which is typically an integrated circuit, or may be implemented as a chip set. The functional blocks of each of the terminal apparatus 1 and the base station apparatus 3 may be individually implemented as a chip, or a part or all of the functional blocks may be integrated into a chip. A circuit integration technique is not limited to the LSI and may be implemented with a dedicated circuit or a general-purpose processor. Moreover, in a case that a circuit integration technology that substitutes an LSI appears with the advance of the semiconductor technology, it is also possible to use an integrated circuit based on the technology.

In addition, although the aforementioned embodiments have described the terminal apparatus as an example of a communication apparatus, the present invention is not limited to such a terminal apparatus, and is also applicable to a terminal apparatus or a communication apparatus that is a stationary type or a non-movable type electronic apparatus installed indoors or outdoors, for example, such as an AV device, a kitchen device, a cleaning or washing machine, an air-conditioning device, office equipment, a vending machine, and other household appliances.

Although, the embodiments of the present invention have been described in detail above referring to the drawings, the specific configuration is not limited to the embodiments and includes, for example, design changes within the scope that do not depart from the gist of the present invention. For an aspect of the present invention, various modifications are possible within the scope of the claims, and embodiments that are made by suitably combining technical means disclosed according to the different embodiments are also included in the technical scope of the present invention. In addition, a configuration in which elements described in the respective embodiments and having mutually similar effects are substituted for one another is also included.

### Industrial Applicability

An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

### Reference Signs List

1 (1A, 1B, 1C) Terminal apparatus
3 (3A, 3B, 3C) Base station apparatus
10, 30 Radio transmission and/or reception unit
11, 31 Antenna unit
12, 32 RF unit
13, 33 Baseband unit
14, 34 Higher layer processing unit
15, 35 Medium access control layer processing unit
16, 36 Radio resource control layer processing unit

## Claims

1. A terminal apparatus comprising:
a transmitter configured to perform, for sidelink transmission with HARQ-ACK feedback disabled, channel sensing while maintaining a contention window size last applied, wherein
in a case that the number of times that the contention window size is maintained reaches a prescribed number of times, the contention window size is configured to a next larger value.

2. A communication method for a terminal apparatus, the communication method comprising the steps of:
performing, for sidelink transmission with HARQ-ACK feedback disabled, channel sensing while maintaining a contention window size last applied; and
in a case that the number of times that the contention window size is maintained reaches a prescribed number of times, configuring the contention window size to a next larger value.
